(19) Europäisches Patentamt
European Patent Office
Office européen des brevets

(11) **EP 4 039 434 B1**

(12) **EUROPÄISCHE PATENTSCHRIFT**

(45) Veröffentlichungstag und Bekanntmachung des Hinweises auf die Patenterteilung:
**03.04.2024 Patentblatt 2024/14**

(21) Anmeldenummer: **21155262.5**

(22) Anmeldetag: **04.02.2021**

(51) Internationale Patentklassifikation (IPC):
**B29B 7/48** (2006.01)    **B29B 7/60** (2006.01)
**B29B 7/72** (2006.01)    **B29C 48/285** (2019.01)
**B29C 48/39** (2019.01)    **B29C 48/40** (2019.01)
**B29C 48/525** (2019.01)    **B29C 48/76** (2019.01)

(52) Gemeinsame Patentklassifikation (CPC):
**B29B 7/60; B29B 7/484; B29B 7/726; B29B 7/728; B29C 48/297; B29C 48/39; B29C 48/402; B29C 48/525; B29C 48/767;** B29B 7/488

(54) **BESCHICKUNGS-SCHNECKENMASCHINE ZUM BESCHICKEN EINER AUFBEREITUNGS-SCHNECKENMASCHINE, UND DARAUF BEZOGENES VERFAHREN**

FEED SCREW-TYPE MACHINE FOR FEEDING A PROCESSING SCREW-TYPE MACHINE, AND RELATED METHOD

MACHINE À VIS DE CHARGEMENT PERMETTANT DE CHARGER UNE MACHINE À VIS DE PRÉPARATION, ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.08.2022 Patentblatt 2022/32**

(73) Patentinhaber: **Coperion GmbH**
**70469 Stuttgart (DE)**

(72) Erfinder:
- **Huber, Stefan**
  **71229 Leonberg (DE)**
- **Schmudde, Markus**
  **71711 Steinheim a.d. Murr (DE)**
- **Marinova, Svetlana**
  **70597 Stuttgart (DE)**
- **Kühn, Ralf**
  **74391 Erligheim (DE)**
- **Kluge, Kai**
  **75428 Illingen (DE)**
- **Rudi, Oleg**
  **74321 Bietigheim-Bissingen (DE)**

- **Kyrion, Dirk**
  **75447 Sternenfels (DE)**
- **Kessler, Robert**
  **71069 Sindelfingen (DE)**
- **Liber, Leonid**
  **71277 Rutesheim (DE)**
- **Matta, Marina**
  **75050 Gemmingen (DE)**
- **Schofer, Jochen**
  **70435 Stuttgart (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
**EP-A1- 3 339 353     CN-A- 101 590 690**
**CN-A- 106 273 049     CN-A- 106 985 365**
**CN-U- 207 327 544     DE-A1- 10 142 294**
**US-A- 4 764 020**

**Beschreibung**

Die Erfindung betrifft eine Beschickungs-Schneckenmaschine zum Beschicken einer Aufbereitungs-Schneckenmaschine. Ferner betrifft die Erfindung eine Aufbereitungsanlage und ein Verfahren zum Betreiben einer Aufbereitungsanlage mit einer derartigen Beschickungs-Schneckenmaschine.

Aus der WO 2015/051859 A1 (entspricht US 2016/0346984 A1) ist eine Seitenbeschickungs-Schneckenmaschine zum Zuführen von Material in einen Extruder bekannt. Zum Befreien des Materials von gasförmigen Begleitstoffen, wie beispielsweise Luft, umfasst die Seitenbeschickungs-Schneckenmaschine ein Entgasungsgehäuse, das stromaufwärts zu einer Förderrichtung an dem Gehäuse der Seitenbeschickungs-Schneckenmaschine angeordnet ist. Die Seitenbeschickungs-Schneckenmaschine umfasst Förderschnecken, die im Bereich einer Zuführöffnung des Materials eine große Steigung und ein Schubkantenprofil aufweisen. In der Förderrichtung stromabwärts weist die Seitenbeschickungs-Schneckenmaschine Förderschnecken auf, die eine reduzierte Steigung und ein normales Dichtprofil haben. Hierdurch wird das Material kompaktiert und mit einem gewissen Druck in den Extruder gefördert.

Aus der US 4,764,020 A ist eine einwellige Schneckenmaschine zum Aufbereiten von viskosen Flüssigkeiten bekannt. Die viskosen Flüssigkeiten werden über eine Zuführeinrichtung zugeführt. Die Zuführeinrichtung umfasst einen trichterförmigen Behälter, in dem zwei rotierende Schneckenwellen angeordnet sind. Die Schneckenwellen sind konisch ausgebildet.

Aus der DE 101 42 294 A1 ist eine Extrusionsformmaschine mit einem ersten Schneckenextruder und einem zweiten Schneckenextruder bekannt. Die Schneckenextruder sind über eine Vakuumkammer miteinander verbunden. Der erste Schneckenextruder umfasst einen Materialeinführabschnitt mit einer trichterförmigen Einfassung und darin angeordneten Schneckenwellen. Die Schneckenwellen sind konisch ausgebildet.

Aus der EP 3 339 353 A1 ist eine Aufbereitungsanlage zum Aufbereiten einer thermoplastischen Polymerzusammensetzung bekannt. Die Aufbereitungsanlage umfasst einen ersten Doppelschneckenextruder und einen zweiten Doppelschneckenextruder. In dem ersten Doppelschneckenextruder wird Material aufbereitet und über eine Schmelzepumpe dem zweiten Doppelschneckenextruder zugeführt, in dem eine weitere Aufbereitung des Materials erfolgt. Der erste Doppelschneckenextruder weist unterschiedlich lange, konisch ausgebildete Schneckenwellen auf.

Aus der CN 106 273 049 A ist eine Anlage zur Aufbereitung von Bakelitpulver bekannt. Die Anlage umfasst einen Doppelschneckenmischer, in den eine Zuführeinrichtung mündet. Die Zuführeinrichtung umfasst einen trichterförmigen Behälter, in dem zwei konisch ausgebildete Schneckenwellen angeordnet sind.

Aus der CN 106 985 365 A ist eine Anlage zur Aufbereitung von Kautschuk bekannt. Die Anlage umfasst einen Extruder und eine Zuführeinrichtung. Die Zuführeinrichtung weist zwei Schneckenwellen auf, die konisch ausgebildet sind.

Aus der CN 101 590 690 A ist eine Anlage zur Aufbereitung von Kunststoff bekannt. Die Anlage umfasst einen Extruder, in den eine Seitenbeschickungsmaschine mündet. Die Seitenbeschickungsmaschine dient zum Zuführen von Füllstoffen mit geringer Schüttdichte. Die Seitenbeschickungsmaschine umfasst ein Gehäuse mit zwei darin angeordneten Schneckenwellen, die konisch ausgebildet sind.

Aus der CN 207 327 544 U ist eine einwellige Beschickungs-Schneckenmaschine zum Granulieren von Bakelitpulver bekannt.

Der Erfindung liegt die Aufgabe zugrunde, eine Beschickungs-Schneckenmaschine zu schaffen, die ein verbessertes Zuführen von Material mit einer geringen Schüttdichte in eine Aufbereitungs-Schneckenmaschine ermöglicht. Das Material soll insbesondere eine Schüttdichte von höchstens 600 g/dm$^3$, insbesondere von höchstens 250 g/dm$^3$, insbesondere von höchstens 200 g/dm$^3$, und insbesondere von höchstens 100 g/dm$^3$ haben. Das Material soll beispielsweise Recyclingmaterial sein. Die Beschickungs-Schneckenmaschine soll insbesondere für das Material einen hohen Durchsatz ermöglichen, so dass die Aufbereitung des Materials in der Aufbereitungs-Schneckenmaschine in einfacher und wirtschaftlicher Weise möglich ist.

Diese Aufgabe wird durch eine Beschickungs-Schneckenmaschine mit den Merkmalen des Anspruchs 1 gelöst. Dadurch, dass das freie Volumen $V(x)$ in der Förderrichtung zumindest bereichsweise monoton abnimmt, wird das Material während des Förderns in einfacher und zuverlässiger Weise kontinuierlich komprimiert. Die Komprimierung kann über die Abnahme des freien Volumens $V(x)$ in gewünschter Weise eingestellt werden. Die Aufbereitungs-Schneckenmaschine wird mit dem komprimierten Material beschickt, wodurch ein hoher Füllgrad der Aufbereitungs-Schneckenmaschine erzielt wird. Aufgrund des hohen Füllgrads ist die Aufbereitungs-Schneckenmaschine in einfacher und wirtschaftlicher Weise betreibbar.

Die bereichsweise monotone Abnahme des freien Volumens $V(x)$ ist insbesondere mathematisch derart zu verstehen, dass sich das freie Volumen $V(x)$ nicht sprunghaft ändert, sondern eine örtliche Ableitung des freien Volumens $V(x)$ in der Förderrichtung zumindest bereichsweise stetig und negativ ist. Die örtliche Ableitung kann auch bereichsweise gleich Null sein. Vorzugsweise nimmt das freie Volumen $V(x)$ zumindest bereichsweise streng monoton ab, so dass die örtliche Ableitung des freien Volumens $V(x)$ in der Förderrichtung bereichsweise ausschließlich negativ ist. Vorzugsweise nimmt das freie Volumen $V(x)$ zumindest in einem Bereich zwischen einem stromabwärts angeordneten Ende der Zuführöffnung und der Beschickungsöffnung, insbesondere in dem gesamten Bereich zwischen dem stromabwärts angeordneten Ende der Zuführöffnung und der Beschickungsöffnung, monoton ab, insbesondere streng monoton ab.

Das freie Volumen V(x) ist definiert als das Produkt der freien Querschnittsfläche A(x) und der Ganghöhe H(x) der mindestens zwei Schneckenwellen in einer Querschnittsebene E(x) an der Förderstelle x. Die freie Querschnittsfläche A(x) ist die Fläche zwischen dem Gehäuse und den mindestens zwei Schneckenwellen in der Querschnittsebene E(x). Die Ganghöhe H(x) ist definiert als die Höhe in der Förderrichtung bei einer Steigung S(x) der mindestens zwei Schneckenwellen in der Querschnittsebene E(x) und bei einem Umlauf bzw. einer Umdrehung. Die Ganghöhe H(x) ist insbesondere eine fiktive Größe bezogen auf die Steigung S(x) in der Querschnittsebene E(x), wenn sich die Steigung S(x) in der Förderrichtung verändert, insbesondere wenn die Steigung S(x) streng monoton abnimmt. Wenn die Steigung S(x) in der Förderrichtung streng monoton abnimmt, ist die Ganghöhe H(x) größer als eine tatsächliche Ganghöhe der mindestens zwei Schneckenwellen.

Die Steigung S(x) ist in der Querschnittsebene E(x) an einem Schneckenaußendurchmesser $D_a(x)$, also an einem Schneckenkamm definiert. Schneiden die Drehachsen der mindestens zwei Schneckenwellen die Querschnittsebene E(x) senkrecht, so haben alle Schneckenkämme der mindestens zwei Schneckenwellen die gleiche Steigung S(x), sodass die Berechnung des freien Volumens V(x) unabhängig davon ist, welcher Schneckenkamm betrachtet wird. Schneiden die Drehachsen der mindestens zwei Schneckenwellen die Querschnittsebene E(x) aufgrund einer konischen Anordnung der mindestens zwei Schneckenwellen in einem Winkel ungleich 90°, so können sich die Steigungen an den Schneckenkämmen in der Querschnittsebene E(x) geringfügig voneinander unterscheiden. In diesem Fall soll die Steigung S(x) ein Mittelwert der Steigungen aller Schneckenkämme der mindestens zwei Schneckenwellen in der Querschnittsebene E(x) sein.

Zur Abnahme des freien Volumens V(x) nimmt die freie Querschnittsfläche A(x) und/oder die Ganghöhe H(x) in der Förderrichtung zumindest bereichsweise monoton ab, insbesondere streng monoton ab. Vorzugsweise nimmt die freie Querschnittsfläche A(x) und die Ganghöhe H(x) in der Förderrichtung zumindest bereichsweise monoton ab, insbesondere streng monoton ab. Beim Fördern wird das Material hierdurch quer zu der Förderrichtung und in der Förderrichtung komprimiert.

Der Schneckenaußendurchmesser der mindestens zwei Schneckenwellen nimmt in der Förderrichtung zumindest bereichsweise ab. Hierdurch wird ein verbessertes Zuführen des Materials in eine Aufbereitungs-Schneckenmaschine gewährleistet. Dadurch, dass der Schneckenaußendurchmesser der mindestens zwei Schneckenwellen in der Förderrichtung zumindest bereichsweise monoton abnimmt, insbesondere streng monoton abnimmt, sind die mindestens zwei Schneckenwellen zumindest bereichsweise konisch ausgebildet. Vorzugsweise nimmt der Schneckenaußendurchmesser der mindestens zwei Schneckenwellen über die gesamte Länge der mindestens zwei Schneckenwellen in der Förderrichtung monoton, insbesondere streng monoton ab. Eine örtliche Ableitung des Schneckenaußendurchmessers in der Förderrichtung ist vorzugsweise konstant. Durch die konische Ausbildung der mindestens zwei Schneckenwellen wird im Bereich der Zuführöffnung eine große freie Querschnittsfläche und/oder eine hohe Kompression des Materials beim Fördern gewährleistet.

Für die konische Ausbildung der mindestens zwei Schneckenwellen ist eine Konizität K definiert, wobei gilt:

$$K = \frac{D_a(x_1)^2}{L \bullet D_a(x_3)}, \text{ wobei}$$

$D_a(x_1)$ den Schneckenaußendurchmesser der mindestens zwei Schneckenwellen an einer Förderstelle $x_1$, die einem Schneckenwellenanfang der mindestens zwei Schneckenwellen entspricht, und

$D_a(x_3)$ einen Schneckenaußendurchmesser der mindestens zwei Schneckenwellen an einer Förderstelle $x_3$, die einem Schneckenwellenende der mindestens zwei Schneckenwellen entspricht, und

L eine Länge der mindestens zwei Schneckenwellen beschreiben.

Für die Konizität K gilt: $0{,}05 \leq K \leq 1$, insbesondere $0{,}3 \leq K \leq 0{,}4$.

Für ein Verhältnis $D_a(x_1)/D_a(x_3)$ gilt insbesondere: $1 \leq D_a(x_1)/D_a(x_3) \leq 4$, insbesondere $1{,}2 \leq D_a(x_1)/D_a(x_3) \leq 3$, und insbesondere $1{,}3 \leq D_a(x_1)/D_a(x_3) \leq 2{,}5$.

Ein Schneckeninnendurchmesser $D_i(x)$ der mindestens zwei Schneckenwellen ist in der Förderrichtung zumindest bereichsweise konstant oder monoton abnehmend oder streng monoton abnehmend.

Für ein Verhältnis eines Schneckeninnendurchmessers $D_i(x_1)$ der mindestens zwei Schneckenwellen an der Förderstelle $x_1$ und eines Schneckeninnendurchmessers $D_1(x_3)$ der mindestens zwei Schneckenwellen an der Förderstelle $x_3$ gilt insbesondere: $1 \leq D_i(x_1)/D_i(x_3) \leq 5$, insbesondere $1{,}25 \leq D_i(x_1)/D_i(x_3) \leq 4$, und insbesondere $1{,}5 \leq D_i(x_1)/D_i(x_3) \leq 3$.

Vorzugsweise ist die Beschickungs-Schneckenmaschine als Seitenbeschickungs-Schneckenmaschine ausgebildet. Die Seitenbeschickungs-Schneckenmaschine ermöglicht einen seitlichen Anschluss an die Aufbereitungs-Schneckenmaschine. Die mindestens zwei Gehäusebohrungen durchdringen einander und haben insbesondere im Querschnitt die Form einer liegenden Acht. Vorzugsweise ist die Beschickungs-Schneckenmaschine zweiwellig ausgebildet. Die Beschickungs-Schneckenmaschine weist insbesondere genau zwei Gehäusebohrungen und genau zwei zugehörige Schneckenwellen auf. Vorzugsweise hat die Beschickungsöffnung im Querschnitt die Form einer liegenden Acht. Die mindestens zwei Schneckenwellen sind insbesondere gleichsinnig oder gegensinnig drehantreibbar und/oder dicht kämmend ausgebildet.

Die mindestens zwei Schneckenwellen umfassen jeweils eine Welle und mindestens ein Schneckenelement. Das mindestens eine Schneckenelement ist einteilig und/oder zweiteilig mit der zugehörigen Welle ausgebildet. Bei einer zweiteiligen Ausbildung ist das mindestens eine Schneckenelement lösbar und drehfest mit der Welle verbunden. Das mindestens eine Schneckenelement der jeweiligen Schneckenwelle weist insbesondere ein Schubkantenprofil an einer aktiven Flanke und/oder einer passiven Flanke auf. Das Schubkantenprofil an der aktiven Flanke und/oder an der passiven Flanke kann sich in der Förderrichtung verändern. Insbesondere kann sich ein Flankenwinkel an der aktiven Flanke und/oder an der passiven Flanke in der Förderrichtung vergrößern. Beispielsweise kann sich der Flankenwinkel der passiven Flanke in der Förderrichtung stärker vergrößern als der Flankenwinkel an der aktiven Flanke. Hierdurch werden ein gutes Einzugsverhalten im Bereich der Zuführöffnung und eine ausreichende Steifigkeit im Bereich der Beschickungsöffnung und des komprimierten Materials erzielt. Die mindestens zwei Schneckenwellen haben eine Gangzahl N, wobei gilt: $1 \leq N \leq 3$, insbesondere $1 \leq N \leq 2$, und insbesondere N = 2. Die jeweilige Schneckenwelle hat somit N Schneckenstege mit zugehörigen Schneckenkämmen.

Vorzugsweise umfasst die Beschickungs-Schneckenmaschine einen Einlauftrichter, der an dem Gehäuse angeordnet ist und in die Zuführöffnung mündet. Vorzugsweise ist eine freie Einlaufquerschnittsfläche des Einlauftrichters in einer Fallrichtung zumindest bereichsweise zunehmend und/oder bereichsweise abnehmend und/oder bereichsweise konstant. Vorzugsweise ist der Einlauftrichter geteilt ausgebildet. Der Einlauftrichter ist insbesondere mit einer Entgasungseinrichtung verbunden. Die Zuführöffnung bildet in dem Gehäuse einen Zuführschacht aus. Vorzugsweise ist eine freie Einlaufquerschnittsfläche des Zuführschachts in einer Fallrichtung zumindest bereichsweise zunehmend und/oder bereichsweise abnehmend und/oder bereichsweise konstant.

Die Beschickungs-Schneckenmaschine umfasst vorzugsweise mindestens eine Temperiereinrichtung. Die mindestens eine Temperiereinrichtung ist mittels eines Temperierfluids und/oder elektrisch betreibbar. Die mindestens eine Temperiereinrichtung umfasst beispielsweise mindestens einen Fluidkanal und/oder mindestens ein elektrisches Heizelement. Der mindestens eine Fluidkanal ist insbesondere in das Gehäuse integriert. Das mindestens eine elektrische Heizelement ist in das Gehäuse integriert und/oder außen an dem Gehäuse angeordnet.

Eine Beschickungs-Schneckenmaschine nach Anspruch 2 gewährleistet ein verbessertes Zuführen des Materials in eine Aufbereitungs-Schneckenmaschine. Die erste Förderstelle $x_1$ ist beispielsweise ein Schneckenwellenanfang der mindestens zwei Schneckenwellen. Die zweite Förderstelle $x_2$ ist beispielsweise ein Gehäuseende, das zu einem Schneckenwellenende der mindestens zwei Schneckenwellen benachbart angeordnet ist. Das Verhältnis des ersten freien Volumens $V(x_1)$ an der ersten Förderstelle $x_1$ zu dem zweiten freien Volumen $V(x_2)$ definiert eine Kompression. Je größer das Verhältnis $V(x_1)/V(x_2)$ ist, desto größer ist die Kompression des Materials beim Fördern von der ersten Förderstelle $x_1$ zu der zweiten Förderstelle $x_2$. Für das erste freie Volumen $V(x_1)$ gilt: $V(x_1) = A(x_1) \cdot H(x_1)$. Entsprechend gilt für das zweite freie Volumen $V(x_2) = A(x_2) \cdot H(x_2)$.

Für ein Verhältnis einer ersten freien Querschnittsfläche $A(x_1)$ in der ersten Querschnittsebene $E(x_1)$ an der Förderstelle $x_1$ zu einer zweiten freien Querschnittsfläche $A(x_2)$ in der Querschnittsebene $E(x_2)$ an der Förderstelle $x_2$ gilt insbesondere: $1 \leq A(x_1)/A(x_2) \leq 8$, insbesondere $1,5 \leq A(x_1)/A(x_2) \leq 7$, insbesondere $2 \leq A(x_1)/A(x_2) \leq 6$.

Für ein Verhältnis einer ersten Ganghöhe $H(xi)$ basierend auf einer ersten Steigung $S(x_1)$ in der ersten Querschnittsebene $E(x_1)$ zu einer zweiten Ganghöhe $H(x_2)$ basierend auf einer zweiten Steigung $S(x_2)$ in der Querschnittsebene $E(x_2)$ gilt insbesondere: $1 \leq H(x_1)/H(x_2) \leq 8$, insbesondere $1,1 \leq H(x_1)/H(x_2) \leq 5$, und insbesondere $1,2 \leq H(x_1)/H(x_2) \leq 3$.

Eine Beschickungs-Schneckenmaschine nach Anspruch 3 gewährleistet ein verbessertes Zuführen des Materials in eine Aufbereitungs-Schneckenmaschine.

Eine Beschickungs-Schneckenmaschine nach Anspruch 4 gewährleistet ein verbessertes Zuführen des Materials in eine Aufbereitungs-Schneckenmaschine. Der Gehäusebohrungsdurchmesser nimmt in der Förderrichtung zumindest bereichsweise monoton ab, insbesondere streng monoton ab. Für ein relatives Spiel $s(x)$ zwischen dem Gehäuse und der mindestens einen Schneckenwelle an einer Förderstelle x gilt:

$$s(x) = \frac{D_G(x) - D_a(x)}{D_a(x)}, \text{ wobei}$$

$D_G(x)$ den Gehäusebohrungsdurchmesser an der Förderstelle x und ein relatives Spiel $s(x)$ zwischen dem Gehäuse und der mindestens einen Schneckenwelle an einer Förderstelle x gilt:

$$s(x) = \frac{D_G(x) - D_a(x)}{D_a(x)}, \text{ wobei}$$

$D_G(x)$ den Gehäusebohrungsdurchmesser an der Förderstelle x und
$D_a(x)$ einen Schneckenaußendurchmesser der mindestens zwei Schneckenwellen an der Förderstelle x beschreiben.

Vorzugsweise ist das relative Spiel $s(x)$ in der Förderrichtung x konstant und/oder nimmt in der Förderrichtung zu.

Für das Verhältnis einer Gehäuselänge $L_G$ des Gehäuses zu einem Schneckenaußendurchmesser $D_a(x_1)$ der mindestens zwei Schneckenwellen an einer Förderstelle $x_1$, die einem Schneckenwellenanfang entspricht, gilt vorzugsweise: $2 \leq L_G/D_a(x_1) \leq 15$, insbesondere $3 \leq L_G/D_a(x_1) \leq 10$, und insbesondere $4 \leq L_G/D_a(x_1) \leq 6$.

Eine Beschickungs-Schneckenmaschine nach Anspruch 5 gewährleistet ein verbessertes Zuführen des Materials in eine Aufbereitungs-Schneckenmaschine. Dadurch, dass die Drehachsen den Winkel $\alpha$ einschließen, laufen die Drehachsen in der Förderrichtung aufeinander zu. Durch die konische Anordnung der mindestens zwei Schneckenwellen wird im Bereich der Zuführöffnung eine große freie Querschnittsfläche und/oder eine hohe Kompression beim Fördern gewährleistet. Das voluminöse Material mit der geringen Schüttdichte kann in einfacher Weise durch die Zuführöffnung zugeführt werden.

Die mindestens zwei Schneckenwellen sind konzentrisch zu den zugehörigen Drehachsen in den mindestens zwei Gehäusebohrungen angeordnet.

Vorzugsweise umfasst die Beschickungs-Schneckenmaschine mindestens einen elektrischen Antriebsmotor und/oder mindestens ein Getriebe, insbesondere ein Verzweigungsgetriebe. Vorzugsweise weist das Getriebe mindestens zwei Abtriebswellen auf, deren zugehörige Drehachsen einen Winkel $\beta$ einschließen, wobei gilt: $\beta = \alpha$. Durch eine derartige konische Ausbildung des Getriebes können die Schneckenwellen in einfacher Weise drehangetrieben werden.

Weiterhin kann die Beschickungs-Schneckenmaschine mindestens zwei Direktantriebe umfassen, die die mindestens zwei Schneckenwellen direkt drehantreiben, also ohne Zwischenschaltung eines Getriebes. Die Beschickungs-Schneckenmaschine kann mindestens ein Winkelausgleichselement, wie beispielsweise ein Kardangelenk und/oder einen Übertragungsriemen und/oder eine Übertragungskette umfassen, das einen Winkel zwischen der jeweiligen Drehachse der mindestens zwei Schneckenwellen und einer zugehörigen Abtriebswelle eines Getriebes und/oder einer Antriebswelle eines Antriebs ausgleicht.

Zur Abdichtung der mindestens zwei Schneckenwellen gegenüber dem Gehäuse weist die Beschickungs-Schneckenmaschine insbesondere mindestens zwei Stopfbuchsenpackungen auf. Die mindestens zwei Stopfbuchsenpackungen sind insbesondere an einer Außenseite des Gehäuses angeordnet, vorzugsweise im Bereich einer Getriebelaterne. Die Getriebelaterne verbindet das Gehäuse mit dem Getriebe mechanisch. Das Kuppeln der mindestens zwei Schneckenwellen mit zugehörigen Abtriebswellen des Getriebes erfolgt innerhalb der Getriebelaterne.

Eine Beschickungs-Schneckenmaschine nach Anspruch 6 gewährleistet ein verbessertes Zuführen des Materials in eine Aufbereitungs-Schneckenmaschine. Das Verhältnis $D_a(x)/D_i(x)$ ist in der Förderrichtung zumindest bereichsweise konstant und/oder abnehmend und/oder ansteigend. Durch das Verhältnis $D_a(x)/D_i(x)$ wird die Gangtiefe der mindestens zwei Schneckenwellen in gewünschter Weise eingestellt. Die Gangtiefe hat Einfluss auf das freie Volumen $V(x)$. Für ein Verhältnis

$$\mathrm{d} = \frac{D_a(x_1)/D_i(x_1)}{D_a(x_3)/D_i(x_3)}$$ gilt, wobei

$D_a(x_1)$ einen Schneckenaußendurchmesser der mindestens zwei Schneckenwellen an einer Förderstelle $x_1$, die einem Schneckenwellenanfang der mindestens zwei Schneckenwellen entspricht,

$D_i(x_1)$ einen Schneckeninnendurchmesser der mindestens zwei Schneckenwellen an der Förderstelle $x_1$,

$D_a(x_3)$ einen Schneckenaußendurchmesser der mindestens zwei Schneckenwellen an einer Förderstelle $x_3$, die einem Schneckenwellenende der mindestens zwei Schneckenwellen entspricht, und

$D_i(x_3)$ einen Schneckeninnendurchmesser der mindestens zwei Schneckenwellen an der Förderstelle $x_3$ beschreiben.

Für das Verhältnis d gilt insbesondere: $0,62 \leq d \leq 1,22$, insbesondere $0,82 < d < 1$. Vorzugsweise gilt: $d = 1$.

Eine Beschickungs-Schneckenmaschine nach Anspruch 7 gewährleistet ein verbessertes Zuführen des Materials in eine Aufbereitungs-Schneckenmaschine. Das Verhältnis $H(x)/D_a(x)$ ist in der Förderrichtung zumindest abschnittsweise konstant und/oder abnehmend und/oder steigend. Vorzugsweise gilt für ein Verhältnis

$$\mathrm{h} = \frac{H(x_1)/D_a(x_1)}{H(x_3)/D_a(x_3)}$$, wobei

$H(x_i)$ eine Ganghöhe der mindestens zwei Schneckenwellen basierend auf einer Steigung $S(x_1)$ an einer Förderstelle $x_1$, die einem Schneckenanfang der mindestens zwei Schneckenwellen entspricht,

$D_a(x_1)$ einen Schneckenaußendurchmesser der mindestens zwei Schneckenwellen an der Förderstelle $x_1$ beschreibt,

$H(x_3)$ eine Ganghöhe der mindestens zwei Schneckenwellen basierend auf einer Steigung $S(x_3)$ an einer Förderstelle $x_3$, die einem Schneckenwellenende der mindestens zwei Schneckenwellen entspricht,

$D_a(x_3)$ einen Schneckenaußendurchmesser der

mindestens zwei Schneckenwellen an der Förderstelle $x_3$ beschreiben.

Für das Verhältnis h gilt insbesondere: $0,5 \leq h \leq 1,5$, insbesondere $0,8 \leq h \leq 1,2$, und insbesondere $0,9 \leq h \leq 1,1$. Vorzugsweise gilt: h = 1.

Die Zuführöffnung weist in der Förderrichtung eine Länge Lz auf. Für die Länge Lz gilt insbesondere: $H(x_1) \leq L_Z \leq 2 \cdot H(x_1)$, insbesondere $1,2 \cdot H(x_1) \leq L_Z \leq 1,5 \cdot H(x_1)$.

Eine Beschickungs-Schneckenmaschine nach Anspruch 8 gewährleistet ein verbessertes Zuführen des Materials in eine Aufbereitungs-Schneckenmaschine. Ein erster Gehäuseabschnitt umfasst die Zuführöffnung, wohingegen ein zweiter Gehäuseabschnitt die Beschickungsöffnung umfasst. Durch die mindestens zwei Gehäuseabschnitte ist eine Länge $L_G$ des Gehäuses in einfacher und flexibler Weise einstellbar. Dadurch, dass das Gehäuse eine größere Länge $L_G$ aufweist, haben auch die mindestens zwei Schneckenwellen eine größere Länge L. Über die Länge L der mindestens zwei Schneckenwellen kann das Komprimieren des Materials beim Fördern in der Förderrichtung einfach und flexibel eingestellt werden.

Die mindestens zwei Gehäuseabschnitte sind in der Förderrichtung nacheinander angeordnet und miteinander zu dem Gehäuse verbunden. Ein letzter Gehäuseabschnitt ist mit der Aufbereitungs-Schneckenmaschine verbunden.

Eine Beschickungs-Schneckenmaschine nach Anspruch 9 gewährleistet ein verbessertes Zuführen des Materials in eine Aufbereitungs-Schneckenmaschine. Dadurch, dass die Welle der jeweiligen Schneckenwelle mit mindestens einem zugehörigen Schneckenelement einteilig ausgebildet ist, sind die mindestens zwei Schneckenwellen in einfacher Weise derart herstellbar, dass das freie Volumen V(x) in der gewünschten Weise in der Förderrichtung abnimmt. Die mindestens zwei Schneckenwellen weisen zudem eine hohe Steifigkeit auf. Die mindestens zwei Schneckenwellen können jeweils mindestens ein Behandlungselement, insbesondere mindestens ein Schneckenelement und/oder mindestens ein Knetelement umfassen, das zweiteilig mit der zugehörigen Welle ausgebildet ist und reversibel mit der zugehörigen Welle verbunden ist. Hierdurch können beispielsweise Behandlungselemente, die einem großen Verschleiß unterliegen, einfach ausgewechselt werden. Zudem können die mindestens zwei Schneckenwellen in einfacher Weise an das Material und/oder an eine gewünschte Förderung und/oder Komprimierung des Materials angepasst werden. Beispielsweise können die mindestens zwei Schneckenwellen Behandlungselemente mit Messern umfassen, die das Material beim Fördern zerkleinern. Vorzugsweise umfassen die mindestens zwei Schneckenwellen jeweils mindestens einen Knetblock mit mehreren einteilig miteinander verbundenen scheibenförmigen Knetelementen. Im Bereich des mindestens einen Knetelements der jeweiligen Schneckenwelle ist ein freies Volumen nicht definiert.

Eine Beschickungs-Schneckenmaschine nach Anspruch 10 gewährleistet ein verbessertes Zuführen des Materials in eine Aufbereitungs-Schneckenmaschine. Die mindestens eine Entgasungseinrichtung ist insbesondere an das Gehäuse und/oder an einen Einlauftrichter angeschlossen. Die mindestens eine Entgasungseinrichtung dient insbesondere zum Abführen von Luft beim Zuführen des Materials in die mindestens zwei Gehäusebohrungen und/oder beim Komprimieren des Materials in den mindestens zwei Gehäusebohrungen. Hierdurch wird das Befüllen der mindestens zwei Gehäusebohrungen im Bereich der Zuführöffnung und/oder die Komprimierung des Materials vereinfacht und verbessert. Insbesondere wird ein Förderwirkungsgrad bzw. Durchsatz der Beschickungs-Schneckenmaschine verbessert. Vorzugsweise umfasst die Beschickungs-Schneckenmaschine mehrere Entgasungsöffnungen, die in der Förderrichtung nacheinander in dem Gehäuse ausgebildet sind. Die Entgasungsöffnungen sind vorzugsweise an einer Unterseite und/oder an einer Oberseite des Gehäuses ausgebildet. In den Entgasungsöffnungen ist insbesondere ein jeweiliger Entgasungseinsatz angeordnet. Die Entgasungsöffnungen sind mit der mindestens einen Entgasungseinrichtung verbunden. Die mindestens eine Entgasungseinrichtung umfasst eine jeweilige Saugleitung, die mit der zugehörigen Entgasungsöffnung verbunden ist und eine Saugeinheit zum Erzeugen eines Unterdrucks. Die jeweilige Entgasungsöffnung hat eine freie Entgasungsfläche $A_E$, wobei für ein Verhältnis der freien Entgasungsfläche $A_E$ zu einem mittleren Schneckenaußendurchmesser $D_{am}$ im Quadrat gilt: $0,3 \leq A_E/D_{am}^2 \leq 6$, insbesondere $0,8 \leq A_E/D_{am}^2 \leq 4,5$, und insbesondere $1,3 \leq A_E/D_{am}^2 \leq 3,5$.

Für den mittleren Schneckenaußendurchmesser $D_{am}$ gilt insbesondere:

$$D_{am} = \frac{D_a(x_1) + D_a(x_3)}{2},$$

wobei

$D_a(x_1)$ einen Schneckenaußendurchmesser der mindestens zwei Schneckenwellen an einer Förderstelle $x_1$, die einem Schneckenwellenanfang der mindestens zwei Schneckenwellen entspricht, und

$D_a(x_3)$ einen Schneckenaußendurchmesser der mindestens zwei Schneckenwellen an einer Förderstelle $x_3$, die einem Schneckenwellenende der mindestens zwei Schneckenwellen entspricht, beschreiben.

Die Zuführöffnung weist eine Zuführöffnungsquerschnittsfläche Az auf, wobei für ein Verhältnis der Zuführöffnungsquerschnittsfläche Az zu dem mittleren Schneckenaußendurchmesser $D_{am}$ im Quadrat insbe-

sondere gilt: $2 \leq A_Z/D_{am}^2 \leq 7$, insbesondere $2,5 \leq A_Z/D_{am}^2 \leq 5,5$, und insbesondere $3 \leq A_Z/D_{am}^2 \leq 4,5$.

Eine Beschickungs-Schneckenmaschine nach Anspruch 11 gewährleistet ein verbessertes Zuführen des Materials in eine Aufbereitungs-Schneckenmaschine. Durch die Komprimierung des Materials wird Flüssigkeit aus dem Material abgepresst. Die Flüssigkeit kann mittels der mindestens einen Abführöffnung aus den mindestens zwei Gehäusebohrungen abgeführt werden, bevor die Flüssigkeit in die Aufbereitungs-Schneckenmaschine gelangt. Die mindestens eine Abführöffnung ist zwischen der Zuführöffnung und der Beschickungsöffnung angeordnet, vorzugsweise nahe der Beschickungsöffnung. Die mindestens eine Abführöffnung ist an einer Unterseite des Gehäuses ausgebildet, so dass die Flüssigkeit aufgrund der Schwerkraft aus den mindestens zwei Gehäusebohrungen abgeführt wird. Die mindestens eine Abführöffnung ermöglicht somit in einfacher Weise ein Entfeuchten des Materials.

Der Erfindung liegt ferner die Aufgabe zugrunde, eine Aufbereitungsanlage zu schaffen, die in einfacher und wirtschaftlicher Weise die Aufbereitung von Material mit einer geringen Schüttdichte ermöglicht.

Diese Aufgabe wird durch eine Aufbereitungsanlage mit den Merkmalen des Anspruchs 12 gelöst. Die Vorteile der erfindungsgemäßen Aufbereitungsanlage entsprechen den bereits beschriebenen Vorteilen der erfindungsgemäßen Beschickungs-Schneckenmaschine. Die Aufbereitungsanlage kann insbesondere mit mindestens einem Merkmal, das im Zusammenhang mit den Ansprüchen 1 bis 10 beschrieben wurde, weitergebildet werden.

Dadurch, dass die Beschickungs-Schneckenmaschine eine vergleichsweise große Menge des Materials einzieht und beim Fördern in der Förderrichtung zu der Aufbereitungs-Schneckenmaschine komprimiert, weist die Beschickungs-Schneckenmaschine einen hohen Durchsatz auf. Hierdurch wird der Aufbereitungs-Schneckenmaschine eine große Menge an komprimierten Material bereitgestellt, das von der Aufbereitungs-Schneckenmaschine in einfacher Weise eingezogen werden kann. Die Aufbereitungs-Schneckenmaschine kann hierdurch mit einem hohen Füllgrad und einem hohen Durchsatz wirtschaftlich betrieben werden.

Die Beschickungs-Schneckenmaschine ist vorzugsweise als Seitenbeschickungs-Schneckenmaschine ausgebildet, die seitlich an die Aufbereitungs-Schneckenmaschine angeschlossen ist.

Die Aufbereitungs-Schneckenmaschine umfasst ein Gehäuse mit mindestens einer Gehäusebohrung. In der mindestens einen Gehäusebohrung ist eine zugehörige Behandlungselementwelle zum Aufbereiten des zugeführten Materials drehbar angeordnet. Die Aufbereitungs-Schneckenmaschine ist vorzugsweise als Mehrwellen-Schneckenmaschine ausgebildet. Vorzugsweise sind in dem Gehäuse mindestens zwei Gehäusebohrungen ausgebildet, die einander durchdringen und im Querschnitt die Form einer liegenden Acht haben. Die mindestens zwei zugehörigen Behandlungselementwellen sind drehbar in den mindestens zwei Gehäusebohrungen angeordnet und vorzugsweise in gleichen Drehrichtungen drehantreibbar. Die mindestens zwei Behandlungselementwellen sind vorzugsweise einander dicht kämmend ausgebildet. In dem Gehäuse ist eine Materialzuführöffnung zum Zuführen des komprimierten Materials ausgebildet, die in Verbindung mit der Beschickungsöffnung der Beschickungs-Schneckenmaschine ist. Die Materialzuführöffnung wird von der Beschickungs-Schneckenmaschine mit dem aufzubereitenden Material beschickt. Vorzugsweise ist die Materialzuführöffnung der Aufbereitungs-Schneckenmaschine seitlich ausgebildet. Die Materialzuführöffnung entspricht im Querschnitt der Beschickungsöffnung. Die mindestens zwei Schneckenwellen erstrecken sich vorzugsweise durch die Beschickungsöffnung und stehen über das Gehäuse über. Der überstehende Teil der mindestens zwei Schneckenwellen mündet vorzugsweise in die Materialzuführöffnung und erstreckt sich in mindestens zwei Verbindungsbohrungen, so dass das komprimierte Material bis zu der mindestens einen Gehäusebohrung der Aufbereitungs-Schneckenmaschine gefördert wird. Die mindestens zwei Verbindungsbohrungen setzen die mindestens zwei Gehäusebohrungen der Beschickungs-Schneckenmaschine fort und definieren mit den mindestens zwei Schneckenwellen insbesondere eine freie Querschnittsfläche, die vorzugsweise monoton abnimmt.

Die mindestens eine Behandlungselementwelle der Aufbereitungs-Schneckenmaschine hat einen Außendurchmesser $D_A$ und einen Innendurchmesser $D_I$. Für das Verhältnis $D_A/D_I$ gilt insbesondere: $1,5 \leq D_A/D_I \leq 1,8$.

Für ein Verhältnis D gilt:
$$D = \frac{D_a(x_3)/D_i(x_3)}{D_A/D_I}$$
, wobei

$D_a(x_3)$ einen Schneckenaußendurchmesser der mindestens zwei Schneckenwellen an einer Förderstelle $x_3$, die einem Schneckenwellenende der mindestens zwei Schneckenwellen entspricht, und

$D_i(x_3)$ einen Schneckeninnendurchmesser, der mindestens zwei Schneckenwellen an der Förderstelle $x_3$ beschreiben.

Für das Verhältnis D gilt insbesondere: $0,66 \leq D \leq 1,61$, insbesondere $0,94 \leq D \leq 1,48$.

Eine Aufbereitungsanlage nach Anspruch 13 gewährleistet einen einfachen und wirtschaftlichen Betrieb. Durch den vergleichsweise großen Schneckenaußendurchmesser $D_a(x_1)$ hat die Beschickungs-Schneckenmaschine eine vergleichsweise große freie Querschnittsfläche $A(xi)$, so dass eine große Menge des Materials eingezogen und komprimiert der Aufbereitungs-Schneckenmaschine zugeführt werden kann.

Eine Aufbereitungsanlage nach Anspruch 14 gewährleistet einen einfachen und wirtschaftlichen Betrieb. Der vergleichsweise große Schneckenaußendurchmesser $D_a(x_3)$ gewährleistet, dass das komprimierte Material in einfacher und zuverlässiger Weise der Aufbereitungs-Schneckenmaschine mit dem gewünschten Durchsatz bereitgestellt wird und diese das komprimierte Material einziehen kann.

Der Erfindung liegt ferner die Aufgabe zugrunde, ein Verfahren zu schaffen, das ein Betreiben einer Aufbereitungsanlage mit Material mit geringer Schüttdichte in einfacher und wirtschaftlicher Weise ermöglicht.

Diese Aufgabe wird durch ein Verfahren mit den Merkmalen des Anspruchs 15 gelöst. Die Vorteile des erfindungsgemäßen Verfahrens entsprechen den bereits beschriebenen Vorteilen der erfindungsgemäßen Beschickungs-Schneckenmaschine und der erfindungsgemäßen Aufbereitungsanlage. Das erfindungsgemäße Verfahren kann insbesondere mit mindestens einem Merkmal weitergebildet werden, das in Zusammenhang mit den Ansprüchen 1 bis 14 beschrieben wurde.

Das Material weist eine Schüttdichte $\rho$ auf. Für die Schüttdichte $\rho$ gilt insbesondere: 5 g/dm³ $\leq \rho \leq$ 600 g/dm³, insbesondere 10 g/dm³ $\leq \rho \leq$ 250 g/dm³, insbesondere 15 g/dm³ $\leq \rho \leq$ 200 g/dm³, und insbesondere 20 g/dm³ $\leq \rho \leq$ 100 g/dm³. Das Material weist eine maximale Materialabmessung $a_{max}$ auf, wobei insbesondere gilt: 1 mm $\leq a_{max} \leq$ 50 mm, insbesondere 5 mm $\leq a_{max} \leq$ 35 mm, und insbesondere 10 mm $\leq a_{max} \leq$ 20 mm.

Das Material ist vorzugsweise ein Folienmaterial. Das Folienmaterial weist eine Foliendicke t auf. Für die Foliendicke t gilt insbesondere: 10 µm $\leq t \leq$ 400 µm, insbesondere 15 µm $\leq t \leq$ 300 µm, und insbesondere 20 µm $\leq t \leq$ 200 µm.

Das Material umfasst vorzugsweise Recyclingmaterial und/oder Füllstoffe, wie beispielsweise pulverförmige Füllstoffe und/oder Verstärkungsstoffe bzw. Verstärkungsfasern und/oder Fasergewölle.

Das Recyclingmaterial liegt beispielsweise als Schnipsel, Flocken und/oder Gewölle vor. Das Recyclingmaterial ist beispielsweise Folienabfallmaterial.

Die Beschickungs-Schneckenmaschine wird mit einer Drehzahl n betrieben, wobei insbesondere gilt: 50 U/min $\leq n \leq$ 1000 U/min, insbesondere 100 U/min $\leq n \leq$ 800 U/min, und insbesondere 200 U/min $\leq n \leq$ 600 U/min. Die Beschickungs-Schneckenmaschine wird weiterhin mit einem Drehmoment $M_d$ pro Schneckenwelle betrieben, wobei für ein Verhältnis des Drehmoment $M_d$ zu einem jeweiligen Achsabstand $a(x_i)$ insbesondere gilt: 0,1 Nm/cm³ $\leq M_d/a(x_1)^3 \leq$ 0,8 Nm/cm³, insbesondere 0,15 Nm/cm³ $\leq M_d/a(x_1)^3 \leq$ 0,5 Nm/cm³, und insbesondere 0,2 Nm/cm³ $\leq M_d/a(x_1)^3 \leq$ 0,35 Nm/cm³.

$a(xi)$ bezeichnet einen jeweiligen Achsabstand der zu den mindestens zwei Schneckenwellen zugehörigen Drehachsen an einer Förderstelle $x_1$, die einem Schneckenwellenanfang der mindestens zwei Schneckenwellen entspricht.

Die Beschickungs-Schneckenmaschine wird insbesondere mit einem dimensionslosen Durchsatz

$$\Phi = \frac{\dot{v}}{n \cdot D_a(x_1)^3}$$ betrieben, wobei

$\dot{v}$ einen der Beschickungs-Schneckenmaschine zugeführten Volumenstrom des Materials,

n eine Drehzahl der mindestens zwei Schneckenwellen und

$D_a(x_1)$ einen Schneckenaußendurchmesser der mindestens zwei Schneckenwellen an einer Förderstelle $x_1$, die einem Schneckenwellenanfang der mindestens zwei Schneckenwellen entspricht, bezeichnen.

Für den Durchsatz $\Phi$ gilt insbesondere: 0,1 $\leq \Phi \leq$ 1,2, insbesondere 0,25 $\leq \Phi \leq$ 1, und insbesondere 0,3 $\leq \Phi \leq$ 0,8.

Weitere Merkmale, Vorteile und Einzelheiten der Erfindung ergeben sich aus der nachfolgenden Beschreibung mehrerer Ausführungsbeispiele. Es zeigen:

Fig. 1 eine Seitenansicht einer Aufbereitungsanlage mit einer Aufbereitungs-Schneckenmaschine und einer Beschickungs-Schneckenmaschine gemäß einem ersten Ausführungsbeispiel,

Fig. 2 eine Draufsicht auf die Aufbereitungsanlage in Fig. 1,

Fig. 3 eine Seitenansicht der Beschickungs-Schneckenmaschine in Fig. 1 ohne die Aufbereitungs-Schneckenmaschine,

Fig. 4 eine Draufsicht auf die Beschickungs-Schneckenmaschine in Fig. 3,

Fig. 5 einen Vertikalschnitt durch die Aufbereitungs-Schneckenmaschine und die Beschickungs-Schneckenmaschine entlang der Schnittlinie V-V in Fig. 2,

Fig. 6 einen Horizontalschnitt durch die Aufbereitungs-Schneckenmaschine und die Beschickungs-Schneckenmaschine entlang der Schnittlinie VI-VI in Fig. 5,

Fig. 7 einen Vertikalschnitt durch die Beschickungs-Schneckenmaschine entlang der Schnittlinie VII-VII in Fig. 3 an einem Schneckenwellenanfang,

Fig. 8 einen Vertikalschnitt durch die Beschickungs-Schneckenmaschine entlang der Schnittlinie VIII-VIII in Fig. 3 an einem Gehäuseende,

Fig. 9 ein Diagramm eines Durchsatzes der Beschickungs-Schneckenmaschine in Abhängigkeit einer Drehzahl für verschiedene Materialien, und

Fig. 10 einen Vertikalschnitt im Bereich eines Einlauftrichters einer Beschickungs-Schneckenmaschine gemäß einem zweiten Ausführungsbeispiel.

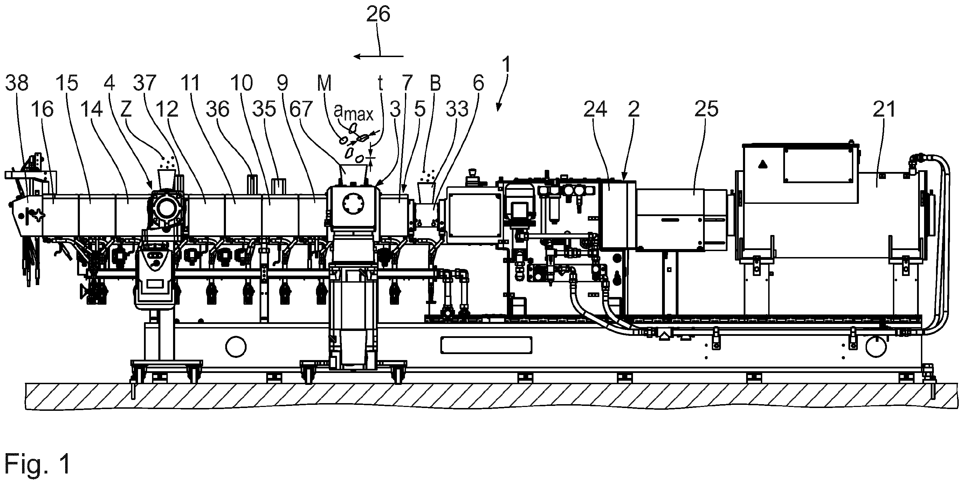

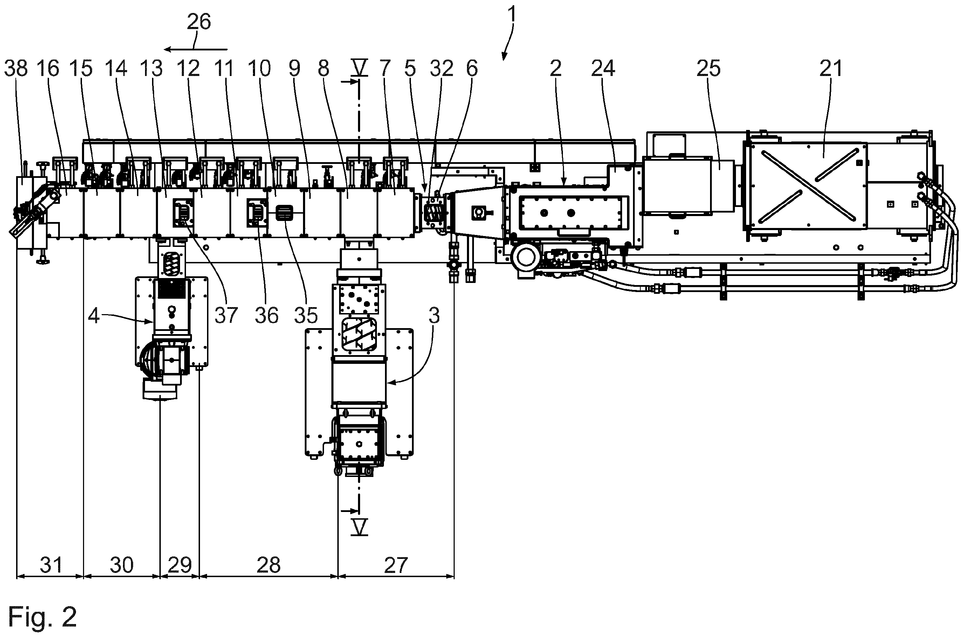

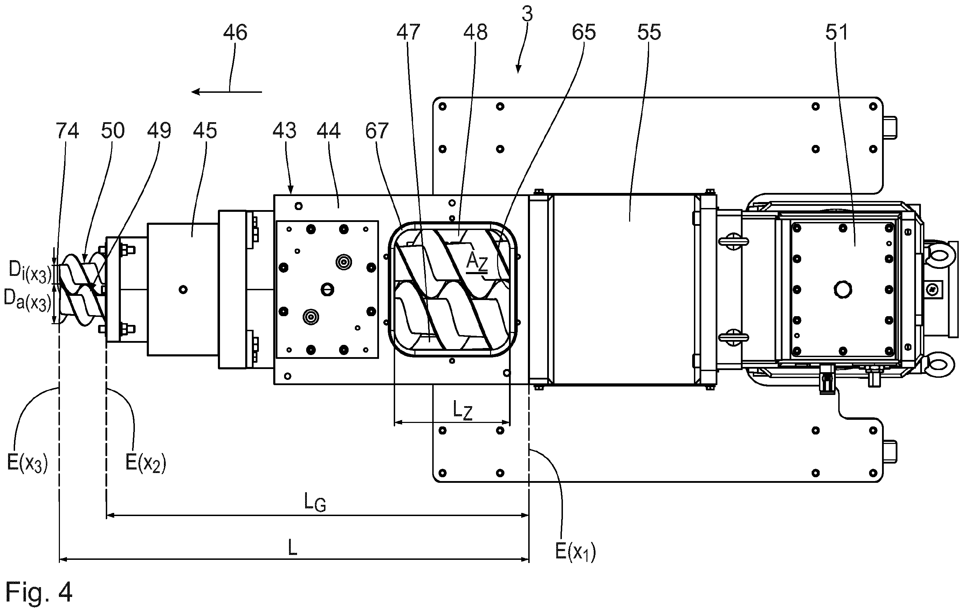

Nachfolgend ist anhand der Fig. 1 bis 9 ein erstes Ausführungsbeispiel der Erfindung beschrieben. Die in den Fig. 1 und 2 dargestellte Aufbereitungsanlage 1 umfasst eine Aufbereitungs-Schneckenmaschine 2, eine erste Beschickungs-Schneckenmaschine 3 zum Beschicken der Aufbereitungs-Schneckenmaschine 2 mit einem Material M mit geringer Schüttdichte und eine zweite Beschickungs-Schneckenmaschine 4 zum Beschicken der Aufbereitungs-Schneckenmaschine 2 mit Zusatzstoffen Z.

Die Aufbereitungs-Schneckenmaschine 2 umfasst ein Gehäuse 5 mit mehreren nacheinander angeordneten Gehäuseabschnitten 6 bis 16. Die Gehäuseabschnitte 6 bis 16 sind zur Ausbildung des Gehäuses 5 miteinander verbunden. Die Aufbereitungs-Schneckenmaschine 2 ist als Mehrwellen-Schneckenmaschine ausgebildet. In dem Gehäuse 5 sind zwei zueinander parallele und einander durchdringende Gehäusebohrungen 17, 18 ausgebildet, die im Querschnitt die Form einer liegenden Acht haben. In den Gehäusebohrungen 17, 18 sind konzentrisch zwei Behandlungselementwellen 19, 20 angeordnet, die von einem elektrischen Antriebsmotor 21 um zugehörige Drehachsen 22, 23 drehantreibbar sind. Zwischen den Behandlungselementwellen 19, 20 und dem Antriebsmotor 21 ist ein Verzweigungsgetriebe 24 angeordnet. Zwischen dem Antriebsmotor 21 und dem Verzweigungsgetriebe 24 ist wiederum eine Kupplung 25 angeordnet. Die Behandlungselementwellen 19, 20 werden mittels des Antriebsmotors 21 gleichsinnig, also in gleichen Drehrichtungen um die Drehachsen 22, 23 drehangetrieben.

Die Aufbereitungs-Schneckenmaschine 2 weist in einer Aufbereitungsrichtung 26 nacheinander eine erste Einzugszone 27, eine Plastifizierzone 28, eine zweite Einzugszone 29, eine Homogenisierungszone 30 und eine Austragszone 31 auf.

In der ersten Einzugszone 27 wird der Aufbereitungs-Schneckenmaschine 2 ein aufzubereitendes Basismaterial B zugeführt. Hierzu ist in dem Gehäuseabschnitt 6 eine erste Materialzuführöffnung 32 ausgebildet. An dem Gehäuseabschnitt 6 ist ein Trichter 33 angeordnet, der in die erste Materialzuführöffnung 32 mündet. Das Basismaterial B ist beispielsweise ein granulatförmiges Kunststoffmaterial. In der Aufbereitungsrichtung 26 stromabwärts zu der ersten Materialzuführöffnung 32 wird der Aufbereitungs-Schneckenmaschine 2 das Material M zugeführt. Das Material M ist beispielsweise ein Recyclingmaterial. Hierzu ist in dem Gehäuseabschnitt 8 eine zweite Materialzuführöffnung 34 ausgebildet. Die zweite Materialzuführöffnung 34 ist seitlich ausgebildet. Verbindungsbohrungen erstrecken sich seitlich von der zweiten Materialzuführöffnung 34 durch den Gehäuseabschnitt 8 und münden in die Gehäusebohrung 17. Es ist auch möglich, in der ersten Einzugszone 27 ausschließlich das Material M über die zweite Materialzuführöffnung 34 zuzuführen und über die ersten Materialzuführöffnung 32 kein Basismaterial B zuzuführen. In diesem Fall kann die erste Materialzuführöffnung 32 zur Entlüftung dienen. Die zweite Materialzuführöffnung 34 kann auch in dem Gehäuseabschnitt 6 oder 7 ausgebildet sein.

Das Basismaterial B und das Material M werden zu der Plastifizierzone 28 gefördert und dort zu einer Materialschmelze aufgeschmolzen. Die Aufbereitungs-Schneckenmaschine 2 umfasst Entgasungseinheiten 35, 36, die in der Plastifizierzone 28 an den Gehäuseabschnitten 10, 11 angeordnet und mit zugehörigen Entgasungsöffnungen in den Gehäuseabschnitten 10, 11 verbunden sind.

Die Materialschmelze wird zu der zweiten Einzugszone 29 gefördert. In der zweiten Einzugszone 29 werden die Zusatzstoffe Z in die Materialschmelze zugeführt. Hierzu ist in dem Gehäuseabschnitt 13 eine nicht näher dargestellte dritte Materialzuführöffnung ausgebildet. Die dritte Materialzuführöffnung erstreckt sich seitlich durch den Gehäuseabschnitt 13 und mündet in die Gehäusebohrung 17. Die zweite Beschickungs-Schneckenmaschine 4 ist üblich ausgebildet und im Detail nicht näher beschrieben. Die zweite Beschickungs-Schneckenmaschine 4 ist seitlich an den Gehäuseabschnitt 13 angeschlossen bzw. daran befestigt. In der zweiten Einzugszone 29 ist eine Entgasungseinheit 37 an dem Gehäuseabschnitt 13 angeordnet, der in eine nicht näher dargestellte Entgasungsöffnung mündet.

Die Materialschmelze wird zusammen mit den Zusatzstoffen Z in die Homogenisierungszone 30 gefördert. In der Homogenisierungszone 30 wird die Materialschmelze mit den Zusatzstoffen Z vermischt und homogenisiert.

In der Austragszone 31 wird die mit den Zusatzstoffen Z versehene Materialschmelze ausgetragen. An dem letzten Gehäuseabschnitt 16 ist eine Düsenplatte 38 angeordnet, die eine nicht näher dargestellte Austragsöffnung ausbildet.

Die Behandlungselementwellen 19, 20 umfassen zur Ausbildung der ersten Einzugszone 27, der Plastifizierzone 28, der zweiten Einzugszone 29, der Homogenisierungszone 30 und der Austragszone 31 in üblicher Weise Behandlungselemente 39, 40, die drehfest auf zugehörigen Wellen 41, 42 angeordnet sind. Die Behandlungselemente 39, 40 sind als Schneckenelemente und/oder Knetelemente ausgebildet. Vorzugsweise sind die Knetelemente als Knetscheiben ausgebildet, wobei insbesondere mehrere Knetscheiben einteilig zu einem Knetblock verbunden sind. Die Behandlungselementwellen 19, 20 haben einen Außendurchmesser $D_A$ und einen Innendurchmesser $D_I$. Es gilt insbesondere: $1{,}5 \leq$

$D_A/D_I \leq 1{,}8$.

Die erste Beschickungs-Schneckenmaschine 3 ist als zweiwellige Seitenbeschickungs-Schneckenmaschine ausgebildet. Die Beschickungs-Schneckenmaschine 3 umfasst ein Gehäuse 43, das zwei Gehäuseabschnitte 44, 45 aufweist. Die Gehäuseabschnitte 44, 45 sind in einer Förderrichtung 46 nacheinander angeordnet und miteinander zu dem Gehäuse 43 verbunden. In dem Gehäuse 43 sind zwei Gehäusebohrungen 47, 48 ausgebildet, die einander durchdringen und im Querschnitt die Form einer liegenden Acht haben. In den Gehäusebohrungen 47, 48 sind zwei Schneckenwellen 49, 50 angeordnet, die über ein Winkelverzweigungsgetriebe 51 mittels eines elektrischen Antriebsmotors 52 um zugehörige Drehachsen 53, 54 gleichsinnig drehantreibbar sind.

Die Beschickungs-Schneckenmaschine 3 umfasst ein Kupplungsgehäuse 55, das das Gehäuse 43 mit dem Winkelverzweigungsgetriebe 51 verbindet. Das Kupplungsgehäuse 55 wird auch als Getriebelaterne bezeichnet. In das Kupplungsgehäuse 55 erstrecken sich zwei Abtriebswellen 56, 57 des Winkelverzweigungsgetriebes 51.

Die Schneckenwellen 49, 50 umfassen jeweils ein Schneckenelement 58, 59, das einteilig mit einer zugehörigen Welle 60, 61 ausgebildet ist. Jeweilige Enden der Wellen 60, 61 erstrecken sich in das Kupplungsgehäuse 55 und sind mittels Kupplungshülsen 62, 63 mit den Abtriebswellen 56, 57 verbunden. Zum Abdichten der Wellen 60, 61 umfasst die Beschickungs-Schneckenmaschine 3 Stopfbuchsenpackungen 70, 71, die an dem Kupplungsgehäuse 55 befestigt sind.

Die Beschickungs-Schneckenmaschine 3 umfasst ein fahrbares Gestell 64, an dem das Kupplungsgehäuse 55 und somit das Winkelverzweigungsgetriebe 51 mit dem daran angeschlossenen Antriebsmotor 52 und das Gehäuse 43 befestigt sind.

Die Beschickungs-Schneckenmaschine 3 umfasst eine Zuführöffnung 65 und eine Beschickungsöffnung 66. Die Zuführöffnung 65 ist in dem ersten Gehäuseabschnitt 44 ausgebildet. Die Beschickungs-Schneckenmaschine 3 umfasst einen Einlauftrichter 67, der in die Zuführöffnung 65 mündet. Die Zuführöffnung 65 ist an einer Oberseite des ersten Gehäuseabschnitts 44 ausgebildet und mündet über einen Zuführschacht in die Gehäusebohrungen 47, 48. Die Zuführöffnung 65 weist in der Förderrichtung 46 eine Länge Lz und eine freie Zuführöffnungsquerschnittsfläche Az auf.

Die Beschickungsöffnung 66 ist an einem der Aufbereitungs-Schneckenmaschine 2 zugewandten Ende des zweiten Gehäuseabschnitts 45 ausgebildet. Die Beschickungsöffnung 66 ist deckungsgleich zu der zweiten Materialzuführöffnung 34 ausgebildet und angeordnet. Die Schneckenwellen 49, 50 erstrecken sich über die Beschickungsöffnung 66 hinaus und münden in die zweite Materialzuführöffnung 34. Die Beschickungsöffnung 66 dient somit zum Beschicken der Aufbereitungs-Schneckenmaschine 2 mit dem Material M.

Zum Abführen von Flüssigkeit ist in dem zweiten Gehäuseabschnitt 45 eine Abführöffnung 68 ausgebildet. Die Abführöffnung 68 ist an einer Unterseite des zweiten Gehäuseabschnitts 45 angeordnet. Die Abführöffnung 68 ist mittels eines Verschlusselements 69 verschließbar.

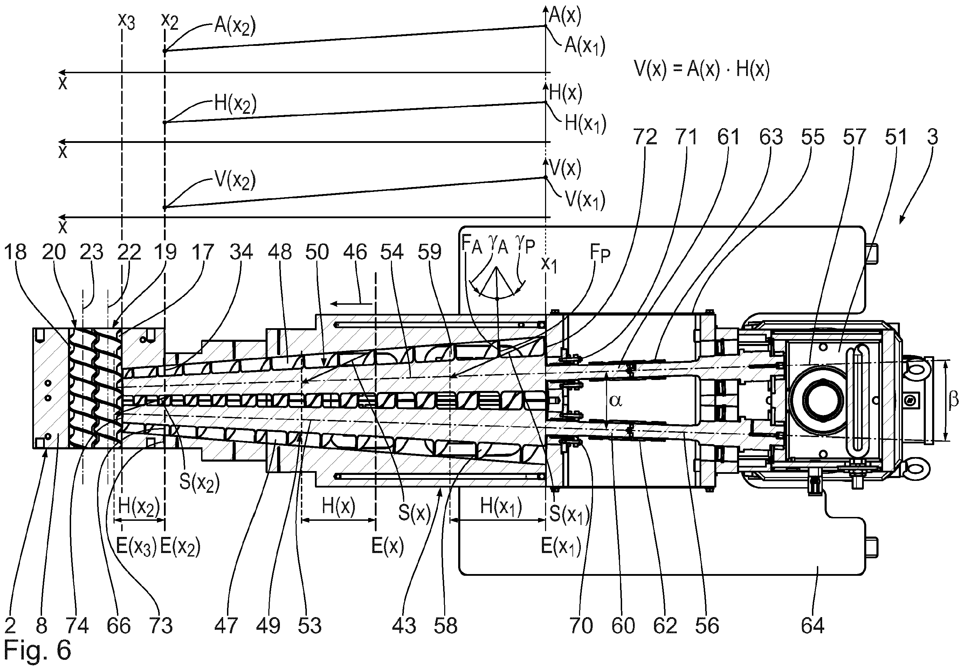

Die Förderrichtung 46 definiert eine x-Achse. Die x-Achse hat ihren Ursprung an einem Schneckenwellenanfang 72 der Schneckenwellen 49, 50. Der Ursprung bzw. der Schneckenwellenanfang 72 ist nachfolgend als Förderstelle $x_1$ bezeichnet. Ein Gehäuseende 73 des Gehäuses 43 ist nachfolgend als Förderstelle $x_2$ bezeichnet. Weiterhin ist ein Schneckenwellenende 74 der Schneckenwellen 49, 50 nachfolgend als Förderstelle $x_3$ bezeichnet. Senkrecht zu der x-Achse sind allgemein an beliebigen Förderstellen $x_1 \leq x \leq x_3$ zugehörige Querschnittsebenen E(x) definiert. Die x-Achse und eine beispielhafte Querschnittsebene E(x) sind in Fig. 6 veranschaulicht.

Die Schneckenwellen 49, 50 sind konisch ausgebildet und in den zugehörigen Gehäusebohrungen 47, 48 konisch angeordnet. Die Drehachsen 53, 54 schließen einen Winkel $\alpha$ ein, wobei gilt: $0° < \alpha \leq 45°$, insbesondere $1° \leq \alpha \leq 20°$, und insbesondere $2° \leq \alpha \leq 10°$. Die Abtriebswellen 56, 57 schließen in entsprechender Weise einen Winkel $\beta$ ein, wobei gilt: $\beta = \alpha$.

Die Schneckenwellen 49, 50 weisen eine Gangzahl N auf, wobei gilt: N = 2. Die Schneckenwellen 49, 50 sind also zweigängig ausgebildet. Zur Vergrößerung einer freien Querschnittsfläche A(x) zwischen dem Gehäuse 43 und den Schneckenwellen 49, 50 in einer jeweiligen Querschnittsebene E(x) haben die Schneckenwellen 49, 50 an einer jeweiligen aktiven Flanke $F_A$ und an einer jeweiligen passiven Flanke $F_P$ ein Schubkantenprofil. Die jeweilige aktive Flanke $F_A$ hat einen Flankenwinkel $\gamma_A$. Entsprechend hat die jeweilige passive Flanke $F_P$ einen Flankenwinkel $\gamma_P$. Der Flankenwinkel $\gamma_A$ und/oder der Flankenwinkel $\gamma_P$ kann in der Förderrichtung 46 konstant sein oder sich verändern, insbesondere vergrößern. Aufgrund der zweigängigen Ausbildung haben die Schneckenwellen 49, 50 in der jeweiligen Querschnittsebene E(x) jeweils zwei Schneckenstege 75, 76. Jeder Schneckensteg 75, 76 hat in der jeweiligen Querschnittsebene E(x) an einem jeweils zugehörigen Schneckenkamm, also an einem Schneckenaußendurchmesser $D_a(x)$, eine jeweilige Steigung. Die Steigungen der Schneckenstege 75, 76 unterscheiden sich aufgrund des Winkels $\alpha$ geringfügig voneinander. Eine Steigung S(x) der Schneckenwellen 49, 50 ist als Mittelwert der Steigungen der Schneckenstege 75, 76 in der jeweiligen Querschnittsebene E(x) definiert. Die Steigung S(x) nimmt in der Förderrichtung 46 streng monoton ab. Die Steigung S(x) ist in Fig. 6 allgemein veranschaulicht. Durch die Steigung S(x) ist eine Ganghöhe H(x) für die jeweilige Querschnittsebene E(x) definiert. Die Ganghöhe H(x) ist eine fiktive Größe bezogen auf die Steigung S(x) in der Querschnittsebene E(x). Dadurch, dass die Steigung S(x) in der Förderrichtung 46 streng monoton abnimmt, ist die Ganghöhe H(x) größer als eine tatsächliche Ganghöhe der Schneckenwellen 49, 50. Die Ganghöhe H(x) ist bei einer Umdrehung mit der Steigung S(x) definiert.

Die freie Querschnittsfläche A(x) und die zugehörige Ganghöhe H(x) definieren für die jeweilige Querschnittsebene E(x) ein freies Volumen V(x), wobei gilt: V(x) = A(x) · H(x). Aufgrund der konischen Ausbildung und aufgrund der in der Förderrichtung 46 streng monoton abnehmenden Ganghöhe H(x) nimmt das freie Volumen V(x) in der Förderrichtung 46 streng monoton ab. Dadurch, dass die freie Querschnittsfläche A(x) und die Ganghöhe H(x) in der Förderrichtung 46 streng monoton abnehmen, wird beim Fördern das Material M in der Förderrichtung 46 komprimiert und quer zu der Förderrichtung 46 komprimiert.

Die Schneckenwellen 49, 50 weisen in der jeweiligen Querschnittsebene E(x) einen Schneckenaußendurchmesser $D_a(x)$ und einen zugehörigen Schneckeninnendurchmesser $D_i(x)$ auf, die in der Förderrichtung 46 streng monoton abnehmen. Für $D_a(x)/D_i(x)$ gilt insbesondere: $1{,}55 \leq D_a(x)/D_i(x) \leq 2{,}5$, insbesondere $1{,}8 \leq D_a(x)/D_i(x) \leq 2{,}2$. Vorzugsweise ist $D_a(x)/D_i(x)$ in der Förderrichtung 46 konstant.

Die Gehäusebohrungen 47, 48 haben in der jeweiligen Querschnittsebene E(x) einen Gehäusebohrungsdurchmesser $D_G(x)$, der in der Förderrichtung 46 streng monoton abnimmt. Ein relatives Spiel

$$s(x) = \frac{D_G(x) - D_a(x)}{D_a(x)}$$

ist in der Förderrichtung 46 konstant und/oder nimmt in der Förderrichtung 46 zu.

Für ein Verhältnis der Ganghöhe H(x) zu dem Schneckenaußendurchmesser $D_a(x)$ gilt insbesondere: $1 < H(x)/D_a(x) \leq 2$, insbesondere $1{,}2 \leq H(x)/D_a(x) \leq 1{,}5$. Das Verhältnis $H(x)/D_a(x)$ ist in der Förderrichtung 46 insbesondere konstant.

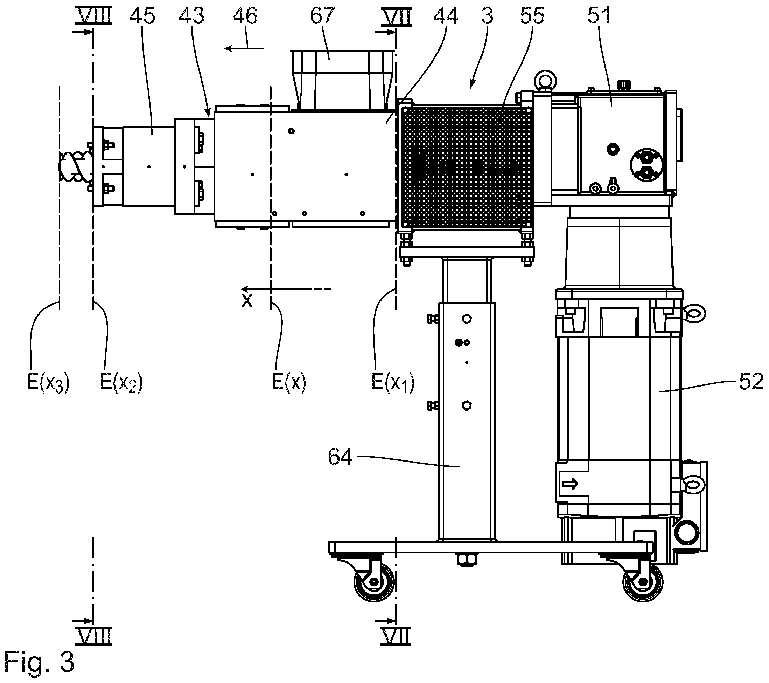

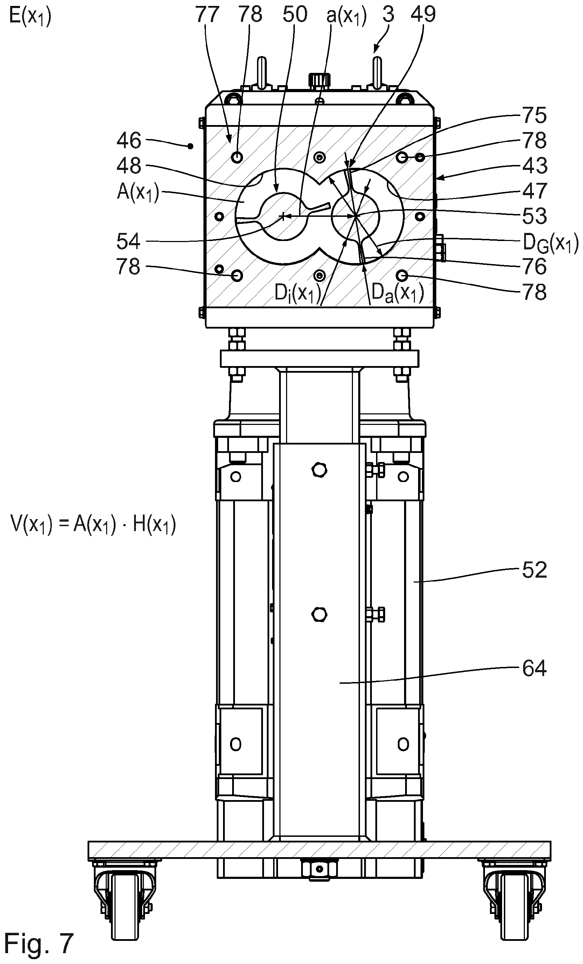

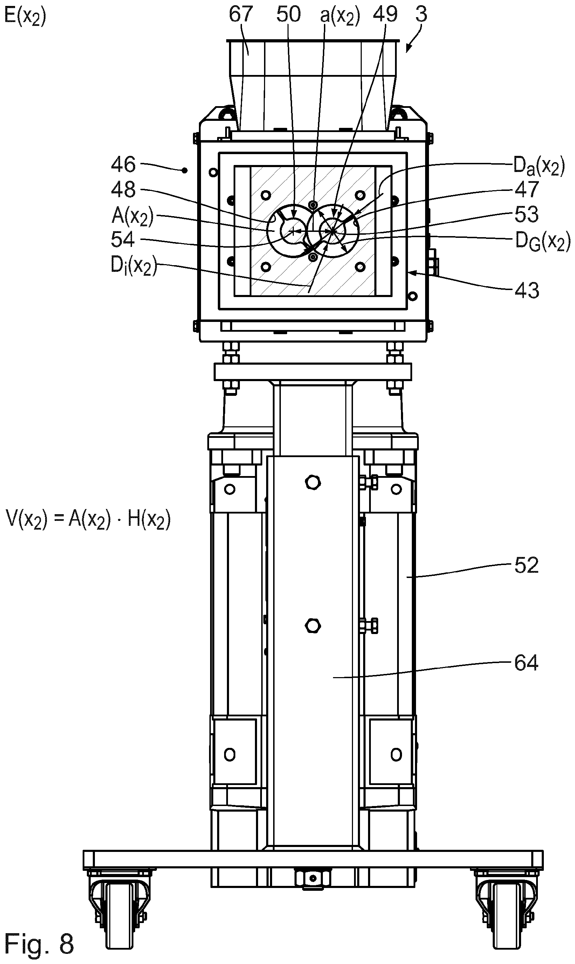

In Fig. 3 und Fig. 6 sind eine Querschnittsebene $E(x_1)$ an der Förderstelle $x_1$, eine Querschnittsebene $E(x_2)$ an der Förderstelle $x_2$ und eine Querschnittsebene $E(x_3)$ an der Förderstelle $x_3$ veranschaulicht. Fig. 7 zeigt die Beschickungs-Schneckenmaschine 3 in der Querschnittsebene $E(x_1)$, wohingegen Fig. 8 die Beschickungs-Schneckenmaschine 3 in der Querschnittsebene $E(x_2)$ zeigt.

In der Querschnittsebene $E(x_1)$ haben die Schneckenwellen 49, 50 einen Schneckenaußendurchmesser $D_a(x_1)$ und einen Schneckeninnendurchmesser $D_i(x_1)$. Ein Achsabstand der Drehachsen 53, 54 beträgt $a(x_1)$. Die Gehäusebohrungen 47, 48 haben einen Gehäusebohrungsdurchmesser $D_G(x_1)$. Die Schneckenwellen 49, 50 legen zusammen mit dem Gehäuse 43 eine freie Querschnittsfläche $A(x_1)$ der Gehäusebohrungen 47, 48 fest.

Die Schneckenstege 75, 76 haben in der Querschnittsebene $E(x_1)$ eine Steigung $S(x_1)$, die für eine Umdrehung eine Ganghöhe H(xi) definiert. Bezogen auf die Querschnittsebene $E(x_1)$ gilt für ein erstes freies Volumen $V(x_1)$: $V(x_1) = A(x_1) \cdot H(x_1)$.

In der Querschnittsebene $E(x_2)$ an der Förderstelle $x_2$ bzw. dem Gehäuseende 73 haben die Schneckenwellen 49, 50 einen Schneckenaußendurchmesser $D_a(x_2)$ und einen Schneckeninnendurchmesser $D_i(x_1)$. Die Drehachsen 53, 54 haben einen Achsabstand $a(x_2)$. Die Gehäusebohrungen 47, 48 weisen einen Gehäusebohrungsdurchmesser $D_G(x_2)$ auf. Die Gehäusebohrungen 47, 48 und die Schneckenwellen 49, 50 legen eine freie Querschnittsfläche $A(x_2)$ fest. Die Schneckenstege 75, 76 haben in der Querschnittsebene $E(x_2)$ eine Steigung $S(x_2)$, die für eine Umdrehung eine Ganghöhe $H(x_2)$ definiert. Bezogen auf die Querschnittsebene $E(x_2)$ gilt für ein zweites freies Volumen $V(x_2)$: $V(x_2) = A(x_2) \cdot H(x_2)$.

In der Querschnittsebene $E(x_3)$ haben die Schneckenwellen 49, 50 einen Schneckenaußendurchmesser $D_a(x_3)$ und einen Schneckeninnendurchmesser $D_i(x_3)$. Die Schneckenstege 75, 76 haben in der Querschnittsebene $E(x_3)$ eine Steigung $S(x_3)$, die für eine Umdrehung eine Ganghöhe $H(x_3)$ definiert. Für einen mittleren Schneckenaußendurchmesser $D_{am}$ gilt: $D_{am} = \dfrac{D_a(x_1) + D_a(x_3)}{2}$.

Für eine Kompression $V(x_1)/V(x_2)$ gilt insbesondere: $1 < V(x_1)/V(x_2) \leq 20$, insbesondere $2 \leq V(x_1)/V(x_2) \leq 15$, und insbesondere $4 \leq V(x_1)/V(x_2) \leq 10$.

Für ein Verhältnis $A(x_1)/A(x_2)$ gilt insbesondere: $1 < A(x_1)/A(x_2) \leq 8$, insbesondere $1{,}5 \leq A(x_1)/A(x_2) \leq 7$, insbesondere $2 \leq A(x_1)/A(x_2) \leq 6$.

Für ein Verhältnis $H(x_1)/H(x_2)$ gilt insbesondere: $1 < H(x_1)/H(x_2) \leq 8$, insbesondere $1{,}1 \leq H(x_1)/H(x_2) \leq 5$, und insbesondere $1{,}2 \leq H(x_1)/H(x_2) \leq 3$.

Für ein Verhältnis $d = \dfrac{D_a(x_1)/D_i(x_1)}{D_a(x_3)/D_i(x_3)}$ gilt insbesondere:
$0{,}62 \leq d \leq 1{,}22$, insbesondere $0{,}82 \leq d \leq 1$. Vorzugsweise gilt: d = 1.

Für ein Verhältnis $h = \dfrac{H(x_1)/D_a(x_1)}{H(x_3)/D_a(x_3)}$ gilt insbesondere:
$0{,}5 \leq h \leq 1{,}5$, insbesondere $0{,}8 \leq h \leq 1{,}2$, und insbesondere $0{,}9 \leq h \leq 1{,}1$. Vorzugsweise gilt: h = 1.

Die Schneckenwellen 49, 50 haben in der Förderrichtung 46 eine Länge L. Für eine Konizität $K = \dfrac{D_a(x_1)^2}{L \bullet D_a(x_3)}$ gilt: $0{,}05 \leq K \leq 1$, insbesondere $0{,}3 \leq K \leq 0{,}4$.

Für das Verhältnis einer Gehäuselänge $L_G$ des Gehäuses 43 zu dem Schneckenaußendurchmesser $D_a(x_1)$ gilt vorzugsweise: $2 \leq L_G/D_a(x_1) \leq 15$, insbesondere $3 \leq L_G/D_a(x_1) \leq 10$, und insbesondere $4 \leq L_G/D_a(x_1) \leq 6$.

Für ein Verhältnis $D_a(x_1)/D_A$ gilt insbesondere: $1 \leq D_a(x_1)/D_A \leq 4$, insbesondere $1{,}5 \leq D_a(x_1)/D_A \leq 3$,

insbesondere $1{,}8 \leq D_a(x_1)/D_A \leq 2{,}5$.

Ferner gilt für ein Verhältnis $D_a(x_3)/D_A$ insbesondere: $1 \leq D_a(x_3)/D_A \leq 1{,}5$, insbesondere $1{,}1 \leq D_a(x_3)/D_A \leq 1{,}4$, insbesondere $1{,}2 \leq D_a(x_3)/D_A < 1{,}3$.

$$D = \frac{D_a(x_3)/D_i(x_3)}{D_A/D_I}$$

Für ein Verhältnis gilt insbesondere: $0{,}66 \leq D \leq 1{,}61$, insbesondere $0{,}94 \leq D \leq 1{,}48$

Die Beschickungs-Schneckenmaschine 3 umfasst eine Temperiereinrichtung 77. Die Temperiereinrichtung 77 dient zum Heizen und/oder Kühlen des Gehäuses 43. Die Temperiereinrichtung 77 umfasst Fluidkanäle 78, die in dem ersten Gehäuseabschnitt 44 ausgebildet sind. Die Fluidkanäle 78 sind an eine nicht näher dargestellte Fluidpumpe angeschlossen. Die Fluidkanäle 78 dienen zur Aufnahme eines Temperierfluids. Das Temperierfluid ist mittels einer nicht näher dargestellten Temperiereinheit in üblicher Weise heizbar und/oder kühlbar. Das Temperierfluid ist beispielsweise Wasser.

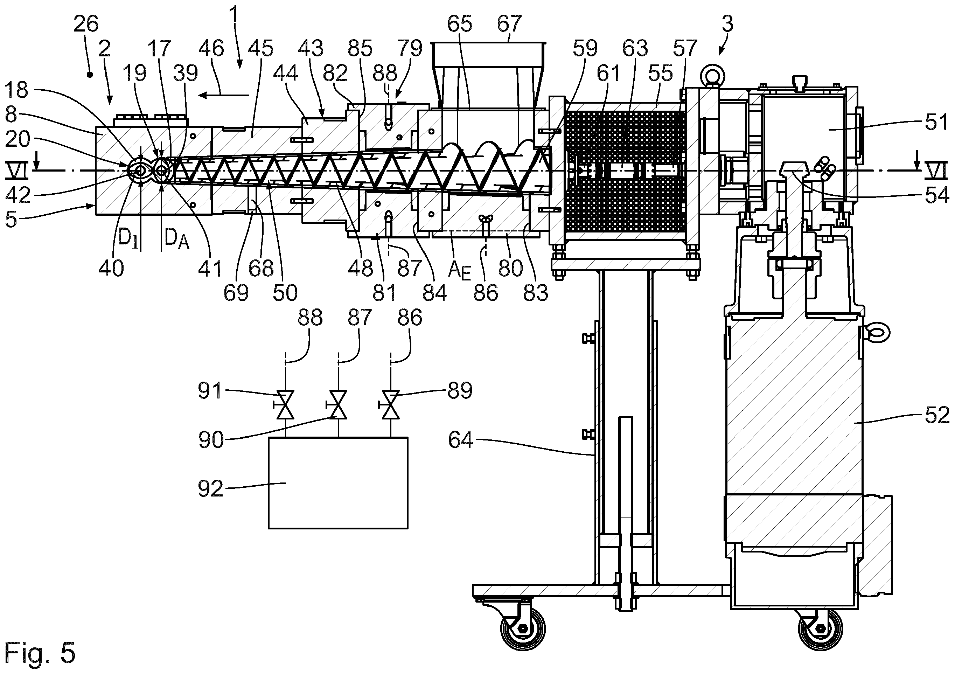

Die Beschickungs-Schneckenmaschine 3 umfasst eine Entgasungseinrichtung 79. Die Entgasungseinrichtung 79 umfasst drei Entgasungseinsätze 80, 81, 82, die in zugehörige Entgasungsöffnungen 83, 84, 85 des ersten Gehäuseabschnitts 44 eingesetzt sind. Die Entgasungseinrichtung 79 ist in Fig. 5 veranschaulicht.

Eine erste Entgasungsöffnung 83 ist an einer Unterseite des ersten Gehäuseabschnitts 44 ausgebildet und liegt der Zuführöffnung 65 gegenüber.

Eine zweite Entgasungsöffnung 84 und eine dritte Entgasungsöffnung 85 sind in der Förderrichtung 46 stromabwärts zu der ersten Entgasungsöffnung 83 in dem ersten Gehäuseabschnitt 44 ausgebildet. Die zweite Entgasungsöffnung 84 ist an der Unterseite angeordnet, wohingegen die dritte Entgasungsöffnung 85 an der Oberseite gegenüberliegend zu der zweiten Entgasungsöffnung 84 ausgebildet ist. Die Entgasungseinsätze 80, 81, 82 sind über eine jeweilige Saugleitung 86, 87, 88 und über ein jeweiliges Ventil 89, 90, 91 an eine Saugeinheit 92 angeschlossen. Über die Ventile 89, 90, 91 ist ein Volumenstrom in der jeweiligen Saugleitung 86, 87, 88 einstellbar.

Die jeweilige Entgasungsöffnung 83, 84, 85 weist eine freie Entgasungsfläche $A_E$ auf. Für ein Verhältnis der freien Entgasungsfläche $A_E$ zu dem mittleren Schneckenaußendurchmesser $D_{am}$ im Quadrat gilt insbesondere: $0{,}3 \leq A_E/D_{am}^2 \leq 6$, insbesondere $0{,}8 \leq A_E/D_{am}^2 \leq 4{,}5$, und insbesondere $1{,}3 \leq A_E/D_{am}^2 \leq 3{,}5$.

Vorzugsweise ist die freie Entgasungsfläche $A_E$ der ersten Entgasungsöffnung 83 größer als die freien Entgasungsflächen $A_E$ der Entgasungsöffnungen 84, 85.

Für die Länge Lz der Zuführöffnung 65 gilt insbesondere: $H(x_1) \leq L_Z \leq 2 \cdot H(x_1)$, insbesondere $1{,}2 \cdot H(x_1) \leq L_Z < 1{,}5 \cdot H(x_1)$.

Für das Verhältnis der Zuführöffnungsquerschnittsfläche Az zu dem mittleren Schneckenaußendurchmesser $D_{am}$ im Quadrat gilt insbesondere: $2 \leq A_Z/D_{am}^2 \leq 7$, insbesondere $2{,}5 \leq A_Z/D_{am}^2 \leq 5{,}5$, und insbesondere $3 \leq A_Z/D_{am}^2 \leq 4{,}5$.

Nachfolgend ist die Funktionsweise bzw. der Betrieb der Aufbereitungsanlage 1 beschrieben:

In der ersten Einzugzone 27 werden das Basismaterial B über die erste Materialzuführöffnung 32 und das Material M über die zweite Materialzuführöffnung 34 in die Gehäusebohrungen 17, 18 zugeführt. Das Basismaterial B ist beispielsweise granulatförmig ausgebildet. Dem Basismaterial B wird das Material M zugemischt, das beispielsweise ein Recyclingmaterial ist. Das Material M hat eine Schüttdichte p, wobei gilt: $5 \text{ g/dm}^3 \leq \rho \leq 600 \text{ g/dm}^3$, insbesondere $10 \text{ g/dm}^3 \leq \rho \leq 250 \text{ g/dm}^3$, insbesondere $15 \text{ g/dm}^3 \leq \rho \leq 200 \text{ g/dm}^3$, und insbesondere $20 \text{ g/dm}^3 \leq \rho \leq 100 \text{ g/dm}$. Das Material M liegt beispielsweise als Schnipsel, Flocken und/oder Gewölle vor. Das Material M hat eine maximale Abmessung $a_{max}$, wobei gilt: $1 \text{ mm} \leq a_{max} \leq 50 \text{ mm}$, insbesondere $5 \text{ mm} \leq a_{max} \leq 35 \text{ mm}$, und insbesondere $10 \text{ mm} \leq a_{max} \leq 20 \text{ mm}$. Das Material M ist beispielsweise ein Folienmaterial mit einer Foliendicke t, wobei gilt: $10 \text{ } \mu\text{m} \leq t \leq 400 \text{ } \mu\text{m}$, insbesondere $15 \text{ } \mu\text{m} \leq t \leq 300 \text{ } \mu\text{m}$, und insbesondere $20 \text{ } \mu\text{m} \leq t \leq 200 \text{ } \mu\text{m}$.

Das Zuführen des Materials M zu der Aufbereitungs-Schneckenmaschine 2 erfolgt mittels der ersten Beschickungs-Schneckenmaschine 3. Hierzu wird das Material M über den Einlauftrichter 67 und die Zuführöffnung 65 in die Gehäusebohrungen 47, 48 der Beschickungs-Schneckenmaschine 3 zugeführt.

Das Material M wird mittels der Schneckenwellen 49, 50 in der Förderrichtung 46 gefördert. Hierzu werden die Schneckenwellen 49, 50 mittels des elektrischen Antriebsmotors 52 über das Winkelverzweigungsgetriebe 51 in gleichen Drehrichtungen drehangetrieben. Dadurch, dass in der Förderrichtung 46 sowohl die freie Querschnittsfläche A(x) als auch die Ganghöhe H(x) streng monoton abnehmen, nimmt auch das freie Volumen V(x) in der Förderrichtung 46 streng monoton ab. Beim Fördern wird das Material M somit in der Förderrichtung 46 komprimiert als auch quer zu der Förderrichtung 46 komprimiert. Dadurch, dass eine örtliche Ableitung der freien Querschnittsfläche A(x), eine örtliche Ableitung der Ganghöhe H(x) und eine örtliche Ableitung des freien Volumens V(x) in der Förderrichtung 46 stetig sind, also nicht springen, erfolgt das Komprimieren in einfacher und zuverlässiger Weise kontinuierlich. Der örtliche Verlauf der freien Querschnittsfläche A(x), der Ganghöhe H(x) und des freien Volumens V(x) ist in Fig. 6 veranschaulicht.

Durch das Komprimieren aus dem Material M entweichende Luft wird über die Entgasungseinrichtung 79 abgesaugt. Der jeweilige Volumenstrom in den Saugleitungen 86, 87, 88 ist über die Ventile 89, 90, 91 nach Bedarf einstellbar. Aufgrund des Komprimierens entstehende Wärme kann mittels der Temperiereinrichtung 77 aus dem Gehäuse 43 abgeführt werden.

Durch das Komprimieren wird das Material M entfeuchtet, so dass sich in den Gehäusebohrungen 47, 48 Flüssigkeit sammelt. Die Flüssigkeit kann über die Abführöffnung 68 abgeführt werden.

Das komprimierte Material M wird durch die Beschickungsöffnung 66 und durch die Verbindungsbohrungen des Gehäuseabschnitts 8 in die Gehäusebohrungen 17, 18 zugeführt. Die in dem Gehäuseabschnitt 8 ausgebildeten Verbindungsbohrungen setzen den Verlauf der Gehäusebohrungen 47, 48 bis zu dem Schneckenwellenende 74 bzw. den Gehäusebohrungen 17, 18 fort.

Die Schneckenwellen 49, 50 werden mit einer Drehzahl n und einem Drehmoment $M_d$ je Schneckenwelle 49, 50 mittels des Antriebsmotors 52 und des Winkelverzweigungsgetriebes 51 drehangetrieben. Für die Drehzahl n gilt insbesondere: 50 U/min ≤ n ≤ 1000 U/min, insbesondere 100 U/min ≤ n ≤ 800 U/min, und insbesondere 200 U/min ≤ n ≤ 600 U/min.

Für ein Verhältnis $M_d/a(x_1)^3$ gilt insbesondere: 0,1 Nm/cm³ ≤ $M_d/a(x_1)^3$ ≤ 0,8 Nm/cm³, insbesondere 0,15 Nm/cm³ ≤ $M_d/a(x_1)^3$ ≤ 0,5 Nm/cm³, und insbesondere 0,2 Nm/cm³ ≤ $M_d/a(x_1)^3$ ≤ 0,35 Nm/cm³.

Dadurch, dass die Beschickungs-Schneckenmaschine 3 im Bereich der Zuführöffnung 65 eine große freie Querschnittsfläche A(x) hat, kann der Beschickungs-Schneckenmaschine 3 eine vergleichsweise große Menge des Materials M zugeführt werden. Das Material M wird anschließend beim Fördern in der beschriebenen Weise komprimiert, wodurch die Aufbereitungs-Schneckenmaschine 2 das komprimierte Material M in der ersten Einzugszone 27 einfach und zuverlässig einziehen kann. Für einen dimensionslosen Durchsatz

$$\Phi = \frac{\dot{v}}{n \cdot D_a(x_1)^3}$$

der Beschickungs-Schneckenmaschine 3 gilt insbesondere: 0,1 ≤ Φ ≤ 1,2, insbesondere 0,25 ≤ Φ ≤ 1, und insbesondere 0,3 ≤ Φ ≤ 0,8. $\dot{v}$ bezeichnet einen der Beschickungs-Schneckenmaschine 3 zugeführten Volumenstrom des Materials M.

Das Basismaterial B und das Material M werden in der Aufbereitungsrichtung 26 zu der Plastifizierzone 28 gefördert und dort zu einer Materialschmelze aufgeschmolzen. Etwaig entweichende Gase können über die Entgasungseinheiten 35, 36 abgeführt werden. In der zweiten Einzugszone 29 werden der Materialschmelze in üblicher Weise Zusatzstoffe Z zugeführt, die in der Homogenisierungszone 30 homogen eingemischt werden. Etwaig entweichende Gase können wiederum über die Entgasungseinheit 37 abgeführt werden. Die mit den Zusatzstoffen Z versehene Materialschmelze wird anschließend in der Austragszone 31 über die Düsenöffnung ausgetragen.

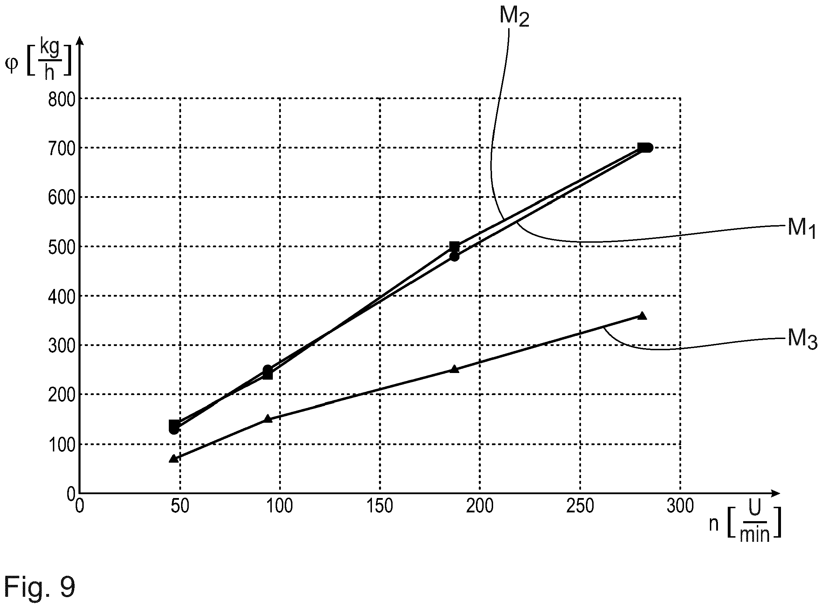

Figur 9 veranschaulicht in einem Diagramm einen Durchsatz φ der Beschickungs-Schneckenmaschine 3 in kg/h in Abhängigkeit der Drehzahl n in U/min für verschiedene Materialien $M_1$, $M_2$, und $M_3$. Das Material $M_1$ hat eine Schüttdichte $\rho_1$ = 37 g/dm³, das Material $M_2$ eine Schüttdichte $\rho_2$ = 41 g/dm³ und das Material $M_3$ eine Schüttdichte $\rho_3$ = 16 g/dm³. Dem gegenüber hat eine übliche Beschickungs-Schneckenmaschine bei einer Maximaldrehzahl von n = 600 U/min bei Material $M_1$ einen

Maximaldurchsatz von 100 kg/h, bei Material $M_2$ einen Maximaldurchsatz von 160 kg/h und bei Material $M_3$ einen Maximaldurchsatz von 70 kg/h.

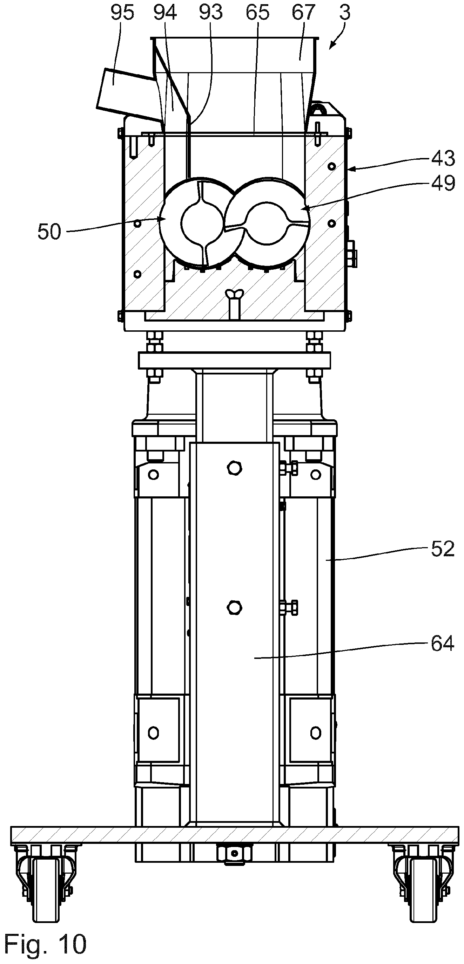

Nachfolgend ist anhand von Fig. 10 ein zweites Ausführungsbeispiel der Erfindung beschrieben. Im Unterschied zu dem ersten Ausführungsbeispiel umfasst die Beschickungs-Schneckenmaschine 3 einen Einlauftrichter 67, der geteilt ist. Der Einlauftrichter 67 weist eine Trennwand 93 auf, so dass in dem Einlauftrichter 67 ein Entgasungskanal 94 ausgebildet ist. Der Entgasungskanal 94 ist über eine Saugleitung 95 an eine weitere Entgasungseinrichtung 79 angeschlossen. Beim Zuführen des Materials M entweichende Luft kann unmittelbar über den Saugkanal 94 abgeführt werden. Hinsichtlich des weiteren Aufbaus und der weiteren Funktionsweise der Aufbereitungsanlage 1 und der Beschickungs-Schneckenmaschine 3 wird auf das vorangegangene Ausführungsbeispiel verwiesen.

**Patentansprüche**

1. Beschickungs-Schneckenmaschine zum Beschicken einer Aufbereitungs-Schneckenmaschine mit

   - einem Gehäuse (43),
   - mindestens zwei in dem Gehäuse (43) ausgebildeten und einander durchdringenden Gehäusebohrungen (47, 48),
   - einer in dem Gehäuse (43) ausgebildeten Zuführöffnung (65) zum Zuführen von Material (M) in die mindestens zwei Gehäusebohrungen (47, 48),
   - einer in dem Gehäuse (43) ausgebildeten Beschickungsöffnung (66) zum Beschicken einer Aufbereitungs-Schneckenmaschine (2) mit dem Material (M), und
   - mindestens zwei in den mindestens zwei Gehäusebohrungen (47, 48) drehbar angeordneten Schneckenwellen (49, 50) zum Fördern des Materials (M) in einer Förderrichtung (46) von der Zuführöffnung (65) zu der Beschickungsöffnung (66),

     -- wobei die mindestens zwei Gehäusebohrungen (47, 48) und die mindestens zwei Schneckenwellen (49, 50) in einer jeweiligen Querschnittsebene (E(x)) ein freies Volumen V(x) = A(x) · H(x) definieren, wobei

       A(x) eine freie Querschnittsfläche in der Querschnittsebene (E(x)),
       H(x) eine Ganghöhe der Schneckenwellen (49, 50) auf Basis einer Steigung (S(x)) in der Querschnittsebene (E(x)), und
       x eine Förderstelle in der Förderrichtung (46) beschreiben,

-- wobei zur kontinuierlichen Komprimierung des Materials (M) das freie Volumen V(x) in der Förderrichtung (46) zumindest bereichsweise monoton abnimmt, und

-- wobei ein Schneckenaußendurchmesser (D$_a$(x)) der mindestens zwei Schneckenwellen (49, 50) in der Förderrichtung (46) zumindest bereichsweise abnimmt,

**dadurch gekennzeichnet,**

**dass** für eine konische Ausbildung der mindestens zwei Schneckenwellen (49, 50) eine Konizität $K = \dfrac{D_a(x_1)^2}{L \cdot D_a(x_3)}$ definiert ist, wobei $0{,}05 \le K \le 1$ gilt, wobei

D$_a$(x$_1$) einen Schneckenaußendurchmesser der mindestens zwei Schneckenwellen (49, 50) an einer Förderstelle x$_1$, die einem Schneckenwellenanfang (72) der mindestens zwei Schneckenwellen (49, 50) entspricht,

D$_a$(x$_3$) einen Schneckenaußendurchmesser der mindestens zwei Schneckenwellen (49, 50) an einer Förderstelle x$_3$, die einem Schneckenwellenende (74) der mindestens zwei Schneckenwellen (49, 50) entspricht, und

L eine Länge der mindestens zwei Schneckenwellen (49, 50) beschreiben.

2. Beschickungs-Schneckenmaschine nach Anspruch 1, **dadurch gekennzeichnet,** **dass** in einer ersten Querschnittsebene (E(x$_1$)) an einer ersten Förderstelle x$_1$ der mindestens zwei Schneckenwellen (49, 50) ein erstes freies Volumen V(x$_1$) und in einer zweiten Querschnittsebene (E(x$_2$)) an einer zweiten Förderstelle x$_2$ der mindestens zwei Schneckenwellen (49, 50), die in der Förderrichtung (46) stromabwärts zu der ersten Förderstelle x$_1$ liegt, ein zweites freies Volumen V(x$_2$) definiert ist, wobei gilt: 1 < V(x$_1$)/ V(x$_2$) $\le$ 20, insbesondere 2 $\le$ V(x$_1$)/ V(x$_2$) $\le$ 15, und insbesondere 4 $\le$ V(x$_1$)/ V(x$_2$) $\le$ 10.

3. Beschickungs-Schneckenmaschine nach Anspruch 1 oder 2, **dadurch gekennzeichnet,** **dass** für die Konizität K gilt: 0,3 $\le$ K $\le$ 0,4.

4. Beschickungs-Schneckenmaschine nach mindestens einem der vorangegangenen Ansprüche, **dadurch gekennzeichnet,** **dass** ein Gehäusebohrungsdurchmesser (D$_G$(x)) der mindestens zwei Gehäusebohrungen (47, 48) in der Förderrichtung (46) zumindest bereichsweise abnimmt.

5. Beschickungs-Schneckenmaschine nach mindestens einem der vorangegangenen Ansprüche, **dadurch gekennzeichnet,** **dass** zu den mindestens zwei Schneckenwellen (49, 50) gehörige Drehachsen (53, 54) einen Winkel $\alpha$ einschließen, wobei gilt: 0° < $\alpha$ $\le$ 45°, insbesondere 1° $\le$ $\alpha$ $\le$ 20°, und insbesondere 2° $\le$ $\alpha$ $\le$ 10°.

6. Beschickungs-Schneckenmaschine nach mindestens einem der vorangegangenen Ansprüche, **dadurch gekennzeichnet,** **dass** die mindestens zwei Schneckenwellen (49, 50) in der jeweiligen Querschnittsebene (E(x)) einen Schneckenaußendurchmesser D$_a$(x) und einen Schneckeninnendurchmesser D$_i$(x) definieren, wobei gilt: 1,55 < D$_a$(x)/D$_i$(x) $\le$ 2,5, insbesondere 1,8 $\le$ D$_a$(x)/D$_i$(x) $\le$ 2,2.

7. Beschickungs-Schneckenmaschine nach mindestens einem der vorangegangenen Ansprüche, **dadurch gekennzeichnet,** **dass** die mindestens zwei Schneckenwellen (49, 50) in der jeweiligen Querschnittsebene (E(x)) die Ganghöhe H(x) und einen Schneckenaußendurchmesser D$_a$(x) definieren, wobei gilt: 1 < H(x)/D$_a$(x) $\le$ 2, insbesondere 1,2 $\le$ H(x)/D$_a$(x) $\le$ 1,5.

8. Beschickungs-Schneckenmaschine nach mindestens einem der vorangegangenen Ansprüche, **dadurch gekennzeichnet,** **dass** das Gehäuse (43) mindestens zwei Gehäuseabschnitte (44, 45) umfasst.

9. Beschickungs-Schneckenmaschine nach mindestens einem der vorangegangenen Ansprüche, **dadurch gekennzeichnet,** **dass** die mindestens zwei Schneckenwellen (49, 50) jeweils eine Welle (60, 61) und mindestens ein Schneckenelement (58, 59) umfassen, die einteilig miteinander ausgebildet sind.

10. Beschickungs-Schneckenmaschine nach mindestens einem der vorangegangenen Ansprüche, **gekennzeichnet,** **durch** mindestens eine Entgasungseinrichtung (79).

11. Beschickungs-Schneckenmaschine nach mindestens einem der vorangegangenen Ansprüche, **dadurch gekennzeichnet,** **dass** in dem Gehäuse (43) mindestens eine Abführöffnung (68) ausgebildet ist.

12. Aufbereitungsanlage mit

 - einer Aufbereitungs-Schneckenmaschine (2) zum Aufbereiten von Material (M), und
 - einer Beschickungs-Schneckenmaschine (3) nach mindestens einem der Ansprüche 1 bis 11 zum Beschicken der Aufbereitungs-Schneckenmaschine (2) mit dem Material (M).

13. Aufbereitungsanlage nach Anspruch 12, **dadurch gekennzeichnet, dass** die Aufbereitungs-Schneckenmaschine (2) mindestens eine Behandlungselementwelle (19, 20) mit einen Außendurchmesser $D_A$ hat, **dass** die mindestens zwei Schneckenwellen (49, 50) in einer Querschnittsebene ($E(x_1)$) an einer Förderstelle $x_1$, die einem Schneckenwellenanfang (72) entspricht, einen Schneckenaußendurchmesser $D_a(x_1)$ haben, wobei gilt: $1 \leq D_a(x_1)/D_A \leq 4$, insbesondere $1,5 \leq D_a(x_1)/D_A \leq 3$, insbesondere $1,8 \leq D_a(x_1)/D_A \leq 2,5$.

14. Aufbereitungsanlage nach Anspruch 12 oder 13, **dadurch gekennzeichnet,**
    **dass** die Aufbereitungs-Schneckenmaschine (2) mindestens eine Behandlungselementwelle (19, 20) mit einen Außendurchmesser $D_A$ hat, **dass** die mindestens zwei Schneckenwellen (49, 50) in einer Querschnittsebene ($E(x_3)$) an einer Förderstelle $x_3$, die einem Schneckenwellenende (74) entspricht, einen Schneckenaußendurchmesser $D_a(x_3)$ haben, wobei gilt: $1 \leq D_a(x_3)/D_A \leq 1,5$, insbesondere $1,1 \leq D_a(x_3)/D_A \leq 1,4$, insbesondere $1,2 \leq D_a(x_3)/D_A \leq 1,3$.

15. Verfahren zum Betreiben einer Aufbereitungsanlage, umfassend folgende Schritte:

    - Bereitstellen einer Aufbereitungsanlage (1) nach mindestens einem der Ansprüche 12 bis 14, und
    - Zuführen von Material (M) durch die Zuführöffnung (65) in die mindestens zwei Gehäusebohrungen (47, 48) der Beschickungs-Schneckenmaschine (3),
    - Fördern des Materials (M) in der Förderrichtung (46) zu der Beschickungsöffnung (66) und zumindest bereichsweise kontinuierliches Komprimieren des Materials (M) während des Förderns, und
    - Beschicken der Aufbereitungs-Schneckenmaschine (2) mit dem komprimierten Material (M).

**Claims**

1. A feeding screw machine for feeding a processing screw machine having

    - a housing (43),
    - at least two housing bores (47, 48) formed in the housing (43) and penetrating each other,
    - a supply opening (65) formed in the housing (43) for supplying material (M) into the at least two housing bores (47, 48),
    - a feeding opening (66) formed in the housing (43) for feeding the material (M) to a processing screw machine (2), and
    - at least two screw shafts (49, 50) rotatably arranged in the at least two housing bores (47, 48) for conveying the material (M) in a conveying direction (46) from the supply opening (65) to the feeding opening (66),

    -- wherein the at least two housing bores (47, 48) and the at least two screw shafts (49, 50) in a respective cross-sectional plane ($E(x)$) define a free volume $V(x) = A(x) \cdot H(x)$, wherein

        $A(x)$ describes a free cross-sectional area in the cross-sectional plane ($E(x)$),
        $H(x)$ describes a pitch of the screw shafts (49, 50) on the basis of an inclination ($S(x)$) in the cross-section plane ($E(x)$), and
        $x$ describes a conveying point in the conveying direction (46),

    -- wherein, for continuous compression of the material (M), the free volume $V(x)$ decreases monotonically in the conveying direction (46) at least in some regions, and
    -- wherein a screw outer diameter ($D_a(x)$) of the at least two screw shafts (49, 50) decreases at least regionally in the conveying direction (46),

    **characterized in**

    **that** a tapering $K = \dfrac{D_a(x_1)^2}{L \bullet D_a(x_3)}$ is defined for a conical configuration of the at least two screw shafts (49, 50), wherein $0.05 \leq K \leq 1$ applies,
    wherein
    $D_a(x_1)$ describes the screw outer diameter of the at least two screw shafts (49, 50) at a conveying point $x_1$ which corresponds to a screw shaft start (72) of the at least two screw shafts (49, 50), $D_a(x_3)$ describes a screw outer diameter of the at least two screw shafts (49, 50) at a conveying point $x_3$ which corresponds to a screw shaft end (74) of the at least two screw shafts (49, 50), and L describes a length of the at least two screw shafts (49, 50).

2. A feeding screw machine according to claim 1, **characterized in that** a first free volume $V(x_1)$ is defined in a first cross-sectional plane ($E(x_1)$) at a first conveying point $x_1$ of the at least two screw shafts (49, 50) and a second free volume $V(x_2)$ is defined in a second cross-sectional plane ($E(x_2)$) at a second

conveying point $x_2$ of the at least two screw shafts (49, 50) which is located downstream of the first conveying point $x_1$ in the conveying direction (46), wherein: $1 < V(x_1)/V(x_2) \leq 20$, in particular $2 \leq V(x_1)/V(x_2) \leq 15$, and in particular $4 \leq V(x_1)/V(x_2) \leq 10$.

3. A feeding screw machine according to claim 1 or 2, **characterized in that** for the tapering K, the following applies: $0.3 \leq K \leq 0.4$.

4. A feeding screw machine according to at least one of the preceding claims, **characterized in that** a housing bore diameter ($D_G(x)$) of the at least two housing bores (47, 48) decreases at least regionally in the conveying direction (46).

5. A feeding screw machine according to at least one of the preceding claims, **characterized in that** axes of rotation (53, 54) associated with the at least two screw shafts (49, 50) enclose an angle $\alpha$, wherein: $0° < \alpha \leq 45°$, in particular $1° \leq \alpha \leq 20°$, and in particular $2° \leq \alpha \leq 10°$.

6. A feeding screw machine according to at least one of the preceding claims, **characterized in that** the at least two screw shafts (49, 50) define in the respective cross-sectional plane (E(x)) a screw outer diameter $D_a(x)$ and a screw inner diameter $D;(x)$, wherein: $1.55 < D_a(x)/D_i(x) \leq 2.5$, in particular $1.8 \leq D_a(x)/D_i(x) \leq 2.2$.

7. A feeding screw machine according to at least one of the preceding claims, **characterized in that** the at least two screw shafts (49, 50) in the respective cross-sectional plane (E(x)) define the pitch H(x) and a screw outer diameter $D_a(x)$, wherein: $1 < H(x)/D_a(x) \leq 2$, in particular $1.2 \leq H(x)/D_a(x) \leq 1.5$.

8. A feeding screw machine according to at least one of the preceding claims, **characterized in that** the housing (43) comprises at least two housing portions (44, 45).

9. A feeding screw machine according to at least one of the preceding claims, **characterized in that** the at least two screw shafts (49, 50) each comprise a shaft (60, 61) and at least one screw element (58, 59) which are formed in one piece with one another.

10. A feeding screw machine according to at least one of the preceding claims, **characterized by** at least one degassing device (79).

11. A feeding screw machine according to at least one of the preceding claims, **characterized in that** at least one discharge opening (68) is formed in the housing (43).

12. A processing installation having

 - a processing screw machine (2) for processing material (M), and
 - a feeding screw machine (3) according to at least one of claims 1 to 11 for feeding the material (M) to the processing screw machine (2).

13. A processing installation according to claim 12, **characterized in that** the processing screw machine (2) has at least one treatment element shaft (19, 20) with an outer diameter $D_A$, **that** the at least two screw shafts (49, 50) have a screw outer diameter $D_a(x_1)$ in a cross-sectional plane ($E(x_1)$) at a conveying point $x_1$ which corresponds to a screw shaft start (72), wherein: $1 \leq D_a(x_1)/D_A < 4$, in particular $1.5 \leq D_a(x_1)/D_A \leq 3$, in particular $1.8 \leq D_a(x_1)/D_A < 2.5$.

14. A processing installation according to claim 12 or 13, **characterized in that** the processing screw machine (2) has at least one treatment element shaft (19, 20) with an outer diameter $D_A$, **that** the at least two screw shafts (49, 50) have a screw outer diameter $D_a(x_3)$ in a cross-sectional plane ($E(x_3)$) at a conveying point $x_3$, which corresponds to a screw shaft end (74), wherein: $1 \leq D_a(x_3)/D_A < 1.5$, in particular $1.1 \leq D_a(x_3)/D_A \leq 1.4$, in particular $1.2 \leq D_a(x_3)/D_A < 1.3$.

15. A method for operating a processing installation, comprising the following steps:

 - providing a processing installation (1) according to at least one of claims 12 to 14, and
 - supplying material (M) through the supply opening (65) into the at least two housing bores (47, 48) of the feeding screw machine (3),
 - conveying the material (M) in the conveying direction (46) to the feeding opening (66) and continuously compressing the material (M) at least regionally while conveying, and
 - feeding the compressed material (M) to the processing screw machine (2).

**Revendications**

1. Machine à vis de chargement pour charger une machine à vis de préparation comprenant

 - un boîtier (43),
 - au moins deux alésages de boîtier (47, 48) formés dans le boîtier (43) et se pénétrant mutuellement,
 - une ouverture d'alimentation (65) formée dans le boîtier (43) pour amener le matériau (M) dans les au moins deux alésages de boîtier (47, 48),

- une ouverture de chargement (66) formée dans le boîtier (43) pour charger une machine de préparation à vis (2) avec le matériau (M), et
- au moins deux arbres à vis sans fin (49, 50) disposés de manière rotative dans les au moins deux alésages de boîtier (47, 48) pour transporter le matériau (M) dans une direction de transport (46) de l'ouverture d'alimentation (65) à l'ouverture de chargement (66),

-- dans laquelle les au moins deux alésages de boîtier (47, 48) et les au moins deux arbres à vis sans fin (49, 50) définissent dans un plan de section transversale respectif (E(x)) un volume libre $V(x) = A(x) \cdot H(x)$, où

A(x) est une surface de section libre dans le plan de section (E(x)),
H(x) est un pas des arbres à vis sans fin (49, 50) sur la base d'un pas (S(x)) dans le plan de section transversale (E(x)), et
x est un point de transport dans la direction du transport (46),

-- dans laquelle, pour comprimer en continu le matériau (M), le volume libre V(x) diminue de manière monotone au moins par zones dans la direction de transport (46), et
-- dans laquelle un diamètre extérieur de vis ($D_a(x)$) des au moins deux arbres à vis sans fin (49, 50) diminue au moins par zones dans la direction de transport (46),

**caractérisée en ce**

**que,** pour une configuration conique des au moins deux arbres à vis sans fin (49, 50),

$$K = \frac{D_a(x_1)^2}{L \cdot D_a(x_3)}$$

une conicité est définie, où $0{,}05 \leq K \leq 1$, dans laquelle $D_a(x_1)$ est un diamètre extérieur de vis des au moins deux arbres à vis sans fin (49, 50) à un point de transport $x_1$, qui correspond à un début d'arbre de vis (72) des au moins deux arbres à vis sans fin (49, 50), $D_a(x_3)$ est un diamètre extérieur de vis des au moins deux arbres à vis sans fin (49, 50) à un point de transport $x_3$, qui correspond à une extrémité d'arbre de vis (74) des au moins deux arbres à vis sans fin (49, 50), et L est une longueur des au moins deux arbres à vis sans fin (49, 50).

2. Machine à vis de chargement selon la revendication 1, **caractérisée en ce**

qu'un premier volume libre $V(x_1)$ est défini dans un premier plan de section transversale ($E(x_1)$) à un premier point de transport $x_1$ des au moins deux arbres à vis sans fin (49, 50) et un deuxième volume libre $V(x_2)$ est défini dans un deuxième plan de section transversale ($E(x_2)$) à un deuxième point de transport $x_2$ des au moins deux arbres à vis sans fin (49, 50), qui est situé en aval du premier point de transport $x_1$ dans la direction de transport (46), avec : $1 < V(x_1)/V(x_2) \leq 20$, en particulier $2 \leq V(x_1)/V(x_2) \leq 15$, et en particulier $4 \leq V(x_1)/V(x_2) \leq 10$.

3. Machine à vis de chargement selon la revendication 1 ou 2, **caractérisée en ce que** pour la conicité K, on a : $0{,}3 \leq K \leq 0{,}4$.

4. Machine à vis de chargement selon au moins l'une quelconque des revendications précédentes, **caractérisée en ce qu'**un diamètre d'alésage de boîtier ($D_G(x)$) des au moins deux alésages de boîtier (47, 48) diminue au moins par zones dans la direction de transport (46).

5. Machine à vis de chargement selon au moins l'une quelconque des revendications précédentes, **caractérisée en ce que** des axes de rotation (53, 54) appartenant aux au moins deux arbres à vis sans fin (49, 50) forment un angle $\alpha$, avec $0° < \alpha \leq 45°$, en particulier $1° \leq \alpha \leq 20°$, et en particulier $2° \leq \alpha \leq 10°$.

6. Machine à vis de chargement selon au moins l'une quelconque des revendications précédentes, **caractérisée en ce que** les au moins deux arbres à vis sans fin (49, 50) définissent dans le plan de section transversale respectif (E(x)) un diamètre extérieur de vis $D_a(x)$ et un diamètre intérieur de vis $D_i(x)$, avec : $1{,}55 < D_a(x)/D_i(x) \leq 2{,}5$, en particulier $1{,}8 \leq D_a(x)/D_i(x) \leq 2{,}2$.

7. Machine à vis de chargement selon au moins l'une quelconque des revendications précédentes, **caractérisée en ce que** les au moins deux arbres à vis sans fin (49, 50) définissent dans le plan de section transversale respectif (E(x)) le pas H(x) et un diamètre extérieur de vis $D_a(x)$, où : $1 < H(x)/D_a(x) \leq 2$, en particulier $1{,}2 \leq H(x)/D_a(x) \leq 1{,}5$.

8. Machine à vis de chargement selon au moins l'une quelconque des revendications précédentes, **caractérisée en ce que** le boîtier (43) comprend au moins deux sections de boîtier (44, 45).

9. Machine à vis de chargement selon au moins l'une quelconque des revendications précédentes, **caractérisée en ce**

**que** les au moins deux arbres à vis sans fin (49, 50) comprennent chacun un arbre (60, 61) et au moins un élément à vis sans fin (58, 59) qui sont réalisés d'une seule pièce l'un avec l'autre.

10. Machine à vis de chargement selon au moins l'une quelconque des revendications précédentes, **caractérisée par** au moins un dispositif de dégazage (79).

11. Machine à vis de chargement selon au moins l'une quelconque des revendications précédentes, **caractérisée en ce qu'**au moins une ouverture d'évacuation (68) est formée dans le boîtier (43).

12. Installation de préparation comprenant

    - une machine à vis de préparation (2) pour préparer le matériau (M), et
    - une machine à vis de chargement (3) selon au moins l'une quelconque des revendications 1 à 11 pour charger la machine à vis de préparation (2) avec le matériau (M).

13. Installation de préparation selon la revendication 12, **caractérisée en ce**

    **que** la machine à vis de préparation (2) a au moins un arbre d'élément de traitement (19, 20) avec un diamètre extérieur $D_A$,
    **que** les au moins deux arbres à vis sans fin (49, 50) ont un diamètre extérieur de vis $D_a(x_1)$ dans un plan de section transversale ($E(x_1)$) à un point de transport $x_1$ qui correspond à un début d'arbre de vis (72), où : $1 \leq D_a(x_1)/D_A \leq 4$, en particulier $1{,}5 \leq D_a(x_1)/D_A \leq 3$, en particulier $1{,}8 \leq D_a(x_1)/D_A \leq 2{,}5$.

14. Installation de préparation selon la revendication 12 ou 13, **caractérisée en ce**

    **que** la machine à vis de préparation (2) a au moins un arbre d'élément de traitement (19, 20) avec un diamètre extérieur $D_A$,
    **que** les au moins deux arbres à vis sans fin (49, 50) ont un diamètre extérieur de vis $D_a(x_3)$ dans un plan de section transversale ($E(x_3)$) à un point de transport $x_3$ qui correspond à une extrémité d'arbre de vis (74), où : $1 \leq D_a(x_3)/D_A \leq 1{,}5$, en particulier $1{,}1 \leq D_a(x_3)/D_A \leq 1{,}4$, en particulier $1{,}2 \leq D_a(x_3)/D_A \leq 1{,}3$.

15. Procédé pour faire fonctionner une installation de préparation, comprenant les étapes suivantes :

    - mise à disposition d'une installation de préparation (1) selon au moins l'une quelconque des revendications 12 à 14, et
    - alimentation du matériau (M) à travers l'ouverture d'alimentation (65) dans les au moins deux alésages de boîtier (47, 48) de la machine à vis de chargement (3),
    - transport du matériau (M) dans la direction de transport (46) vers l'ouverture de chargement (66) et la compression continue, au moins par zones, du matériau (M) pendant le transport, et
    - chargement de la machine à vis de préparation (2) avec le matériau comprimé (M).

Fig. 1

Fig. 2

Fig. 3

Fig. 4

Fig. 5

Fig. 6

$V(x) = A(x) \cdot H(x)$

EP 4 039 434 B1

$E(x_1)$

77 78 50 $a(x_1)$ 3 49

46

48

$A(x_1)$

54

78

75

78

43

47

53

$D_G(x_1)$

76

78

$D_i(x_1)$ $D_a(x_1)$

$V(x_1) = A(x_1) \cdot H(x_1)$

52

64

Fig. 7

$E(x_2)$

67　50　$a(x_2)$　49　3

46

48

$A(x_2)$

54

$D_i(x_2)$

$D_a(x_2)$

47

53

$D_G(x_2)$

43

$V(x_2) = A(x_2) \cdot H(x_2)$

52

64

Fig. 8

Fig. 9

EP 4 039 434 B1

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015051859 A1
- US 20160346984 A1
- US 4764020 A
- DE 10142294 A1
- EP 3339353 A1
- CN 106273049 A
- CN 106985365 A
- CN 101590690 A
- CN 207327544 U